(19) Europäisches Patentamt
European Patent Office
Office européen des brevets

(11) **EP 2 547 985 B1**

(12) **EUROPÄISCHE PATENTSCHRIFT**

(45) Veröffentlichungstag und Bekanntmachung des Hinweises auf die Patenterteilung:
**16.03.2016  Patentblatt 2016/11**

(21) Anmeldenummer: **11710454.7**

(22) Anmeldetag: **17.03.2011**

(51) Int Cl.:
*G01C 19/56* (2012.01)

(86) Internationale Anmeldenummer:
**PCT/EP2011/054090**

(87) Internationale Veröffentlichungsnummer:
**WO 2011/113917 (22.09.2011 Gazette 2011/38)**

(54) **VERFAHREN ZUR ENTKOPPELTEN REGELUNG DER QUADRATUR UND DER RESONANZFREQUENZ EINES MIKROMECHANISCHEN DREHRATENSENSORS MITTELS SIGMA-DELTA-MODULATION**

METHOD FOR THE DECOUPLED CONTROL OF THE QUADRATURE AND THE RESONANCE FREQUENCY OF A MICRO-MECHANICAL ROTATION RATE SENSOR BY MEANS OF SIGMA-DELTA-MODULATION

PROCÉDÉ DE RÉGULATION DÉCOUPLÉE DE LA QUADRATURE ET DE LA FRÉQUENCE DE RÉSONANCE D'UN CAPTEUR DE VITESSE DE ROTATION MICROMÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2010  DE 102010011781**

(43) Veröffentlichungstag der Anmeldung:
**23.01.2013  Patentblatt 2013/04**

(73) Patentinhaber:
• **Continental Teves AG & Co. oHG**
  **60488 Frankfurt (DE)**
• **Albert-Ludwigs-Universität Freiburg**
  **79085 Freiburg (DE)**

(72) Erfinder:
• **EGRETZBERGER, Markus**
  **A-3452 Atzenbrugg (AT)**
• **KUGI, Andreas**
  **A-1200 Wien (AT)**
• **MAIR, Florian**
  **A-1040 Wien (AT)**
• **MAURER, Michael**
  **79365 Rheinhausen (DE)**
• **MANOLI, Yiannos**
  **79104 Freiburg (DE)**
• **NORTHEMANN, Thomas**
  **79106 Freiburg (DE)**

(56) Entgegenhaltungen:
WO-A1-2004/038331     WO-A1-2005/066585
WO-A1-2008/031480

**Beschreibung**

Die Erfindung betrifft ein Verfahren gemäß Oberbegriff von Anspruch 1 sowie einen mikromechanischen Drehratensensor mit vier Trimm-Elektrodenelementen, welche einer ersten seismischen Masse gemeinsam zugeordnet sind.

Es ist bekannt, dass mikromechanische Federn zur Aufhängung seismischer Massen in Drehratensensoren teilweise schon aufgrund relativ geringer Fertigungsungenauigkeiten, die insbesondere zu unerwünschten Flankenwinkeln der jeweiligen Strukturen führen, ohne Vorliegen einer Drehrate, in der Antriebsmode bzw. Primärmode Auslenkungen in Ausleserichtung verursachen. Hierdurch werden Störsignale erzeugt, welche unerwünschterweise als Drehratensignalanteile ausgewertet werden können und somit das Drehratensignal verfälschen bzw. einen Messfehler bezüglich des Drehratensignals verursachen.

Solche unerwünschten Flankenwinkel bzw. Verkippungen von Federn sind prozessbedingt und können nur eingeschränkt vermieden werden. Obig beschriebene Störsignale, welche nicht aufgrund einer erfassten Drehrate, sondern aufgrund von fehlerhaften Auslenkungen in Ausleserichtung in Abhängigkeit der Auslenkung der seismischen Masse sowie deren Federn in Antriebsrichtung entstehen, werden auch als Quadratur bzw. Quadratursignale bezeichnet.

Druckschrift WO 03/010492 A1 schlägt ein Verfahren zur Unterdrückung von Quadratursignalen in einem Drehratensensor vor, welcher zwei Trimmelektroden-Anordnungen umfasst, die einer seismischen Masse zugeordnet sind, bei dem mittels der an den Trimmelektroden angelegten Spannung die Quadratur des Drehratensensors unterdrückt wird. Allerdings kann durch diese Quadraturunterdrückung die Resonanzfrequenz der Auslesemode des Drehratensensors in unerwünschter Weise beeinflusst werden, wodurch auch die Differenzfrequenz zwischen den Resonanzfrequenzen hinsichtlich der Antriebsmode bzw. Primärmode und der Auslesemode bzw. Sekundärmode des Drehratensensors verändert wird. Dies ist umso nachteiliger, da die an den Trimmelektroden angelegte Spannung in die Verschiebung der Resonanzfrequenz der Auslesemode quadratisch eingeht.

Es ist üblich, dass die Ausprägung der Quadratur von Drehratensensoren eines Wafers, aufgrund von Prozessschwankungen relativ stark streut bzw. sich von Drehratensensor zu Drehratensensor eines Wafers relativ stark unterscheidet.

Außerdem ist es bekannt, die Auslenkung der seismischen Masse/n eines Drehratensensors bezüglich der Auslesemode bzw. Sekundärmode mittels wenigstens eines Trimm-Elektrodenelements bzw. einer Trimmelektrode zurückzustellen. Dies beeinflusst allerdings ebenfalls normalerweise die Resonanzfrequenz des Sekundäroszillators sowie eine mögliche Quadraturunterdrückung.

Die Druckschrift WO2005/066585 A1 offenbart ein Verfahren zur Quadraturbias-Kompensation in einem Corioliskreisel sowie einen dafür geeigneten Corioliskreisel mit einer seismischen Masse und vier Trimm-Elektrodenelementen, wobei zwischen der seismischen Masse und den Trimm-Elektrodenelementen jeweils eine Trimmspannung in Abhängigkeit einer Resonanzfrequenzstellgröße, einer Quadraturstellgröße und einer Rückstellgröße eingestellt wird.

Die Erfindung hat sich die Aufgabe gestellt, ein Verfahren zum Messbetrieb eines Drehratensensors sowie einen entsprechenden Drehratensensors vorzuschlagen, mit welchem eine Rückstellung der Auslenkung der Sekundärmode aufgrund einer erfassten Drehrate, eine Quadraturunterdrückung und eine Resonanzfrequenzeinstellung des Sekundäroszillators gemeinsam durchgeführt werden können, insbesondere so, dass diese drei Beeinflussungen zumindest teilweise unabhängig voneinander durchgeführt bzw. eingestellt werden können.

Diese Aufgabe wird erfindungsgemäß gelöst durch das Verfahren gemäß Anspruch 1 sowie den mikromechanischen Drehratensensor gemäß Anspruch 12.

Das Verfahren sowie der Drehratensensor sind vorzugsweise so ausgeprägt bzw. ausgebildet, dass zumindest die Einstellung der Resonanzfrequenz unabhängig von der Rückstellung der Auslenkung der seismischen Masse aufgrund einer erfassten Drehrate und der Quadraturunterdrückung durchgeführt werden kann, sowie dass insbesondere auch die Rückstellung der Auslenkung aufgrund einer erfassten Drehrate bzw. die gesamte Auslenkung der zumindest einen seismischen Masse im Rahmen der Sekundärmode sowie die Quadraturunterdrückung voneinander unabhängig eingestellt werden können.

Die Quadraturstellgröße ist vorzugsweise als statische Stellgröße zur Unterdrückung der auf Quadratur beruhenden Auslenkung bzw. Schwingung der Sekundärmode definiert. Damit wird insbesondere ein unerwünschtes Quadratursignal bzw. ein Quadratursignalanteil des Ausgangssignals des Drehratensensors, welcher gegenüber dem die Drehrate abbildenden Anteil des Ausgangssignals des Drehratensensors im Wesentlichen um 90° bzw. 270° phasenverschoben ist, unterdrückt.

Die Rückstellstellgröße ist zweckmäßigerweise ein harmonisches Schwingungssignal, dessen Amplitude durch den Ausgang der ersten Reglereinheit bestimmt wird, wobei dieser Amplitudenwert mit einem harmonischen Schwingungssignal multipliziert wird, welches die gleich Frequenz aufweist, wie die Primär- bzw. Antriebsmode.

Die Resonanzfrequenzstellgröße ist bevorzugt als statische Größe definiert, mit welcher die Frequenzdifferenz aus der Resonanzfrequenz der Auslesemode und der Resonanzfrequenz der Antriebsmode im Wesentlichen einen definierten Wert aufweist bzw. auf einen definierten Wert eingeregelt wird oder alternativ vorzugsweise im Wesentlichen Null ist bzw. auf Null eingeregelt wird.

Unter einer Antriebsmode bzw. Primärmode wird bevorzugt eine Eigenmode eines Drehratensensors verstanden, bevorzugt die Eigenschwingung, besonders bevorzugt die Schwingung mit einer Resonanzfrequenz, der mindestens einen seismischen Masse, in welcher die seismische Masse des Drehratensensors insbesondere ständig schwingt. Ganz besonders bevorzugt weist der Drehratensensor wenigstens zwei mit einander gekoppelte seismische Massen auf, welche gegenphasig schwingen bzw. jeweils mit inverser Orientierung zueinander in gleicher Richtung im Zuge der Antriebsmode ausgelenkt werden.

Unter einer Auslesemode bzw. Sekundärmode wird vorzugsweise eine Eigenmode verstanden, welche sich vorzugsweise aufgrund einer Drehrate und der damit verbundenen Wirkung der Corioliskraft einstellt.

Erfindungsgemäß umfasst der Drehratensensor vier Trimm-Elektrodenelemente, welche der seismischen Masse direkt oder indirekt gemeinsam zugeordnet sind, wobei zwischen dem ersten Trimm-Elektrodenelement und der seismischen Masse eine erste elektrische Trimmspannung angelegt wird, zwischen dem zweiten Trimm-Elektrodenelement und der seismischen Masse eine zweite Trimmspannung, zwischen dem dritten Trimm-Elektrodenelement und der seismischen Masse eine dritte Trimmspannung und zwischen dem vierten Trimm-Elektrodenelement und der seismischen Masse eine vierte Trimmspannung angelegt wird, wobei die erste $u_1$, die zweite $u_2$, die dritte $u_3$ und die vierte Trimmspannung $u_4$ jeweils im Wesentlichen in folgender Abhängigkeit der Resonanzfrequenzstellgröße $\tilde{u}_T$, der Quadraturstellgröße $\tilde{u}_C$ und der Rückstellgröße $\tilde{u}_T$ eingestellt werden:

$$u_1 = \sqrt{\tilde{u}_T - \tilde{u}_C + \tilde{u}_S}, \quad u_2 = \sqrt{\tilde{u}_T + \tilde{u}_C - \tilde{u}_S},$$

$$u_3 = \sqrt{\tilde{u}_T + \tilde{u}_C + \tilde{u}_S}, \quad u_4 = \sqrt{\tilde{u}_T - \tilde{u}_C - \tilde{u}_S}.$$

Unter der Rückstellgröße wird alternativ vorzugsweise auch $\tilde{U}_{SD}$ verstanden und/oder unter der Resonanzfrequenzstellgröße $\tilde{U}_{T,0}$ und/oder unter der Quadraturstellgröße $\tilde{U}_{C,0}$.

Vorzugsweise sind die Trimm-Elektrodenelemente jeweils so ausgebildet und angeordnet, dass sich zwischen dem ersten, zweiten, dritten und vierten Trimm-Elektrodenelement und einem jeweils zugeordneten Massen-Elektrodenelement der zugeordneten seismischen Masse, wobei zwischen Trimm-Elektrodenelement und Massen-Elektrodenelement die zugehörige Trimmspannung angelegt wird, eine Kapazität $C_1$, $C_2$, $C_3$ und $C_4$ wie folgt ausbildet

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2} \text{ und}$$

$$C_4 = \varepsilon_0 \frac{A_4 - r_4 t_4 q_1}{g_4 + s_4 q_2},$$

wobei i jeweils ein Index bezüglich der Nummerierung der Elektrodenelemente ist, $g_i$ die Spaltentfernung zwischen Trimm-Elektrodenelement und zugeordnetem Massen-Elektrodenelement im unausgelenkten Zustand, $A_i$ die Überlappfläche zwischen Trimm-Elektrodenelement und zugeordnetem Massen-Elektrodenelement im unausgelenkten Zustand, das Produkt $\pm r_i$ mal $t_i$ mal $q_1$ die Änderung der Überlappfläche in Abhängigkeit der Auslenkung der Primärmode $q_1$ ist, wobei $t_i$ die Überlapptiefe zwischen Trimm-Elektrodenelement und zugeordnetem Massen-Elektrodenelement und $r_i$ eine erste positive geometrische Konstante bezüglich der Auslenkung der Primärmode $q_1$ ist, und das Produkt $\pm s_i$ mal $q_2$ die Änderung der Spaltentfernung zwischen Trimm-Elektrodenelement und Massen-Elektrodenelement in Abhängigkeit der Auslenkung der Sekundärmode $q_2$ ist, wobei $s_i$ eine zweite positive geometrische Konstante bezüglich der Auslenkung der Sekundärmode $q_2$ ist.

Die Trimm-Elektrodenelemente sind vorzugsweise als ebene Kondensatorplatten ausgebildet, welche im Wesentlichen parallel zur x-y-Ebene eines kartesischen Koordinatensystems angeordnet sind. Dabei erfolgt die Auslenkung, durch das Produkt $\pm r_i * q_1$ definiert, der Massen-Elektrodenelemente insbesondere in x-Richtung relativ zu den Trimm-Elektrodenelementen. Die Überlapptiefe $t_i$ der Trimm-Elektrodenelemente ist dabei in y-Richtung ausgerichtet. Die Auslenkung der Massen-Elektrodenelemente in z-Richtung relativ zu den Trimm-Elektrodenelementen ist besonders bevorzugt in z-Richtung ausgerichtet.

Vorzugsweise sind bei sämtlichen Trimm-Elektrodenelement-Massen-Elektrodenelementpaaren $A_i$, $r_i$, $t_i$, $g_i$ und $s_i$ im Wesentlichen gleich groß, also $A_1 = A_2 = A_3 = A_4$, und entsprechend jeweils gleiche Werte für i-ten Werte von $r_i$, $t_i$, $g_i$ und $s_i$.

Erfindungsgemäß umfasst der Drehratensensor eine Regelungsanordnung, wobei die Regelungsanordnung einen Sigma-Delta-Wandler umfasst, mit welchem eine die erfasste Auslenkung der seismischen Masse in ihrer Sekundärmode repräsentierende Regelgröße direkt oder wenigstens eine davon abhängige Größe digitalisiert wird und wonach die Resonanzfrequenzstellgröße, die Quadraturstellgröße und die Rückstellgröße als digitale Größen erzeugt werden.

Es ist bevorzugt, dass in der Regelungsanordnung zunächst aus der Regelgröße unter Vorgabe einer Regelführungsgröße eine Regelfehlergröße gebildet wird, wobei die Regelgröße die erfasste Auslenkung der seismischen Masse in Richtung ihrer Sekundärmode repräsentiert, und wobei die Regelführungsgröße ein harmonisches Frequenzidentifikationssignal ($y_D$) mit der Frequenz $\omega_s$ moduliert mit der Frequenz der Primärmode ($\omega_1$) ist oder der Regelführungsgröße solch ein Frequenzidentifikationssignal überlagert ist, wonach die so gebildete Regelfehlergröße einer ersten Reglereinheit zugeführt wird, in welcher zumindest die Rückstellgröße erzeugt wird. Insbesondere wird danach die Rückstellgröße mit zwei zueinander um 90° phasenverschobenen harmonischen Signalen in einer ersten Demodulatoreinheit demoduliert, wodurch eine Quadraturgröße und eine Drehratengröße gewonnen werden, wonach aus der Quadraturgröße in Abhängigkeit einer Quadraturführungsgröße, insbesondere mit dem Wert "0", eine Quadraturregelfehlergröße erzeugt wird, welche einer Quadraturreglereinheit zugeführt wird, die ausgangsseitig die Quadraturstellgröße bereitstellt und wobei die Drehratengröße oder Quadraturgröße in einer zweiten Demodulatoreinheit mit der Frequenz $\omega_s$ demoduliert wird, wodurch eine Frequenzgröße gewonnen wird, wonach aus der Frequenzgröße in Abhängigkeit einer Frequenzführungsgröße, insbesondere mit dem Wert "0" eine Frequenzregelfehlergröße erzeugt wird, die einer Frequenzreglereinheit zugeführt wird, die ausgangsseitig die Resonanzfrequenzstellgröße $\tilde{u}_T$ bereitstellt.

Insbesondere weist der Drehratensensor eine Rückstelleinheit auf, welche die Rückstellgröße bereitstellt, wobei diese Rückstellgröße besonders bevorzugt einen definierten konstanten Rückstellwert aufweist.

Der in der Regelungsanordnung umfasste sigma-Delta wandler ist insbesondere als elektro-mechanischer Sigma-Delta-Modulator ausgebildet.

Besonders bevorzugt umfasst der Sigma-Delta-Modulator einen Kapazitäts-Spannungs-Wandler, welcher eingangsseitig vor der ersten Reglereinheit angeordnet ist, die erste Reglereinheit selber, einen mit dieser ausgangsseitig verbundenen Quantisierer, beispielsweise mit der Abtastfrequenz $f_s$, sowie für die Rückführung der Regelung einen Digital-Analog-Wandler und einen Spannungs-Kraft-Wandler.

Es ist zweckmäßig, dass das Ausgangssignal der ersten Reglereinheit digitalisiert wird und zumindest die erste Demodulatoreinheit, die zweite Demodulatoreinheit, die Quadraturreglereinheit und die Frequenzreglereinheit digital ausgebildet sind, sowie insbesondere zusätzlich die Stellgrößentransformationseinheit und/oder die Rückstelleinheit ebenfalls digital ausgebildet sind.

Vorzugsweise werden jeweils zwei Trimmspannungen paarweise jeweils mittels eines Mischers verarbeitet, jeweils paarweise in Abhängigkeit des digitalen Ausgangssignals des Quantisierers.

Es ist bevorzugt, dass die erste und die vierte Trimmspannung mittels eines ersten Mischers (M1) und die zweite und die dritte Trimmspannung mittels eines zweiten Mischers (M2) verarbeitet werden, jeweils in Abhängigkeit des digitalen Ausgangssignals des Quantisierers.

Bevorzugt weist der Drehratensensor, insbesondere dessen Regelungsanordnung, eine Stellgrößentransformationseinheit auf, durch welche in Abhängigkeit der Resonanzfrequenzstellgröße $\tilde{u}_T$, der Quadraturstellgröße $\tilde{u}_C$ und der Rückstellgröße $\tilde{u}_S$ nach Maßgabe der Gleichungen

$$u_1 = \sqrt{\tilde{u}_T - \tilde{u}_C + \tilde{u}_S}, \ u_2 = \sqrt{\tilde{u}_T + \tilde{u}_C - \tilde{u}_S},$$

$u_3 = \sqrt{\tilde{u}_T + \tilde{u}_C + \tilde{u}_S}, \ u_4 = \sqrt{\tilde{u}_T - \tilde{u}_C - \tilde{u}_S}$ die Trimmspannungen $u_1$, $u_2$, $u_3$ und $u_4$ bereitgestellt werden.

Es ist bevorzugt, dass der Drehratensensor so ausgebildet ist, dass er Drehraten um zumindest zwei verschiedene Achsen erfassen kann, also der Drehratensensor "mehrachsig" ausgebildet ist.

Es ist bevorzugt, dass das erste und das zweite Trimm-Elektrodenelement, insbesondere hinsichtlich seiner jeweiligen Elektrodenfläche, im Wesentlichen unbeweglich ausgebildet und angeordnet sind und elektrisch isoliert und beabstandet gegenüber der seismischen Masse angeordnet sind.

Die Trimm-Elektrodenelemente sind zweckmäßigerweise voneinander isoliert und besonders bevorzugt jeweils identisch ausgebildet.

Der Drehratensensor weist zweckmäßigerweise zwei seismische Massen auf, welche miteinander gekoppelt sind.

Es ist zweckmäßig, dass das erste und das zweite Trimm-Elektrodenelement jeweils zumindest eine Elektrodenfläche aufweisen, welche einer Trimmfläche der seismischen Masse im Wesentlichen parallel gegenüberliegend angeordnet sind und wobei die Elektrodenflächen des ersten und zweiten Trimm-Elektrodenelements stets einem gegenüberliegenden Bereich der Trimmfläche zugeordnet sind und/oder diesen Bereich überlappen, insbesondere unabhängig vom Auslenkungszustand der seismischen Masse, zumindest bis zu einer definierten Amplitude/Auslenkung, besonders bevorzugt auch bei maximaler Auslenkung der seismischen Masse. Zweckmäßigerweise ragen die Elektrodenflächen dabei stets über den gegenüberliegenden Bereich der Trimmfläche hinaus. Die Elektrodenflächen und die Trimmfläche sind ganz besonders bevorzugt im Wesentlichen plan ausgebildet.

Unter einem mikromechanischen Drehratensensor wird bevorzugt ein mikromechanisches Gyroskop verstanden.

Die Erfindung betrifft auch die Verwendung des Drehratensensors in Kraftfahrzeugen, insbesondere in einem Kraftfahrzeugregelungssystem.

Das erfindungsgemäße Verfahren sowie der erfindungsgemäße Drehratensensor kann in unterschiedlichen Bereichen zum Erfassen einer oder mehrerer Drehraten und/oder mittels entsprechender Signalverarbeitung zur Erfassung einer oder mehrerer Drehbeschleunigungen verwendet werden. Dabei ist die Verwendung in Fahrzeugen, insbesondere in Kraftfahrzeugen und Luftfahrzeugen, in der Automatisierungstechnik, in Navigationssystemen, in Bildstabilisatoren von Kameras, in der Industrierobotik und in Spielekonsolen bevorzugt, dabei besonders bevorzugt in den jeweiligen entsprechenden Regelungssystemen. Ganz besonders bevorzugt ist die Verwendung des Verfahrens sowie des Drehratensensors bei/als Gierraten- und/oder Gierbeschleunigungssensor/en in einem Kraftfahrzeugregelungssystem, wie beispielsweise ESP.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung

Fig. 1    ein Ausführungsbeispiel einer Kapazität gebildet aus einem bezüglich des Sensorgehäuses ortsfesten Trimm-Elektrodenelement und einem mit der seismischen Masse verbundenen oder als Teil derselben ausgebildeten Massen-Elektrodenelement,

Fig. 2    ein Ausführungsbeispiel eines Verfahrens bzw. Drehratensensors, bei welchem ein Frequenzidentifikationssignal als harmonischer Sollwert vor dem ersten Regler und vor einer Demodulation als Führungsgröße der Regelgröße vorgegeben wird,

Fig. 3    ein beispielhaftes Modell eines 1-Bit Elektromechanischen Sigma-Delta Modulators mit Sensor und Filterstruktur bzw. erstem Regler,

Fig. 4    eine beispielhafte Veranschaulichung eines vereinfachten Regelkreises,

Fig. 5    ein Darstellung eines vereinfachten Spektrums eines elektro-mechanischen Sigma-Delta Modulators,

Fig. 6    a) eine beispielhafte multi-bit Rückkopplung auf eine Elektrode und b) eine single-bit Rückkopplung über mehrere Elektroden,

Fig. 7    beispielhafte Ausleseschaltungen mit a) singleended und b) differentiellem Aufbau, und

Fig. 8    ein Ausführungsbeispiel eines Verfahrens bzw. Drehratensensors, mit Vorgabe eines Frequenzidentifikationssignals als harmonischen Sollwert für die Regelgröße, mittels Sigma-Delta Modulation.

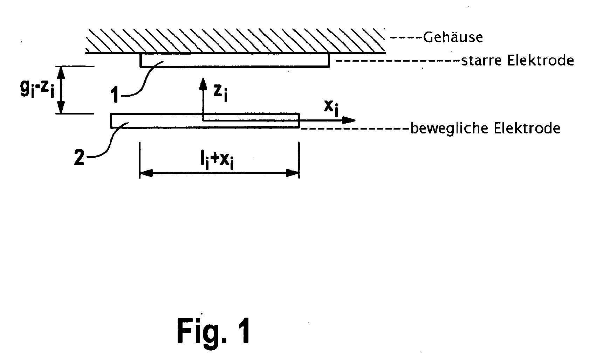

Die in Fig. 1 dargestellte beispielhafte Kapazität aus Trimm-Elektrodenelement 1 und Massen-Elektrodenelement 2 ist als Parallelplattenkondensator- wobei der Abstand bzw. die Spaltentfernung $g_i$ in z-Richtung zwischen den beiden Elektroden ausgebildet ist und die Auslenkung des Massen-Elektrodenelements in der Primärmode in x-Richtung erfolgt, wobei die Änderung der Überlappfläche in x-Richtung erfolgt, und die Auslenkung des Massen-Elektrodenelements in der Sekundärmode in z-Richtung erfolgt.

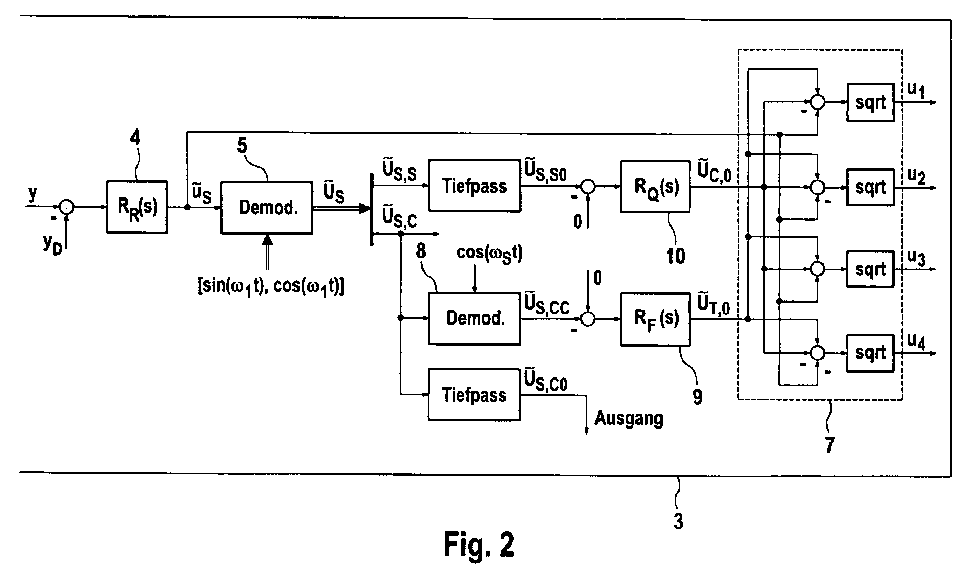

Fig. 2 veranschaulicht ein beispielhaftes Verfahren bzw. einen beispielhaften Drehratensensor, umfassend eine Regelungsanordnung 3, in der zunächst aus der Regelgröße y unter Vorgabe einer Regelführungsgröße $y_D$ eine Regelfehlergröße gebildet wird, wobei die Regelgröße y die erfasste Auslenkung der seismischen Masse in Richtung ihrer Sekundärmode repräsentiert, und wobei die Regelführungsgröße ein harmonisches Frequenzidentifikationssignal mit der Frequenz $\omega_s$ moduliert mit der Frequenz der Primärmode $\omega_1$ ist, wonach die so gebildete Regelfehlergröße einer ersten Reglereinheit 4 zugeführt wird, in welcher die Rückstellgröße $\tilde{u}_S$ erzeugt wird.

Die Rückstellgröße $\tilde{u}_S$ wird einerseits direkt der Stellgrößentransformationseinheit 7 zugeführt und außerdem wird die Rückstellgröße $\tilde{u}_S$ mit zwei zueinander um 90° phasenverschobenen harmonischen Signalen in einer ersten Demodulatoreinheit 5 demoduliert, wodurch eine Quadraturgröße $\tilde{U}_{S,S}$ und eine Drehratengröße $\tilde{U}_{S,C}$, gemeinsam als $\tilde{U}_S$ symbolisiert, gewonnen werden, wonach aus der Quadraturgröße $\tilde{U}_{S,S}$ in Abhängigkeit einer Quadraturführungsgröße, insbesondere mit dem Wert "0", eine Quadraturregelfehlergröße erzeugt wird, welche einer Quadraturreglereinheit 10 zugeführt wird, die ausgangsseitig die Quadraturstellgröße $\tilde{u}_C$, bzw. hier $\tilde{U}_{C,0}$ genannt bereitstellt und wobei die

Drehratengröße $\tilde{U}_{S,C}$ in einer zweiten Demodulatoreinheit 8 mit der Frequenz $\omega_S$ demoduliert wird, wodurch eine Frequenzgröße $\tilde{U}_{S,CC}$ gewonnen wird, wonach aus der Frequenzgröße in Abhängigkeit einer Frequenzführungsgröße, insbesondere mit dem Wert "0" eine Frequenzregelfehlergröße erzeugt wird, die einer Frequenzreglereinheit 9 zugeführt wird, die ausgangsseitig die Resonanzfrequenzstellgröße $\tilde{u}_T$, hier $\tilde{U}_T,0$ genannt, bereitstellt. Die Drehratengröße $\tilde{U}_{S,C}$ wird außerdem tiefpassgefiltert und bildet das Ausgangssignal $\tilde{U}_{S,C0}$ des Sensors, welches die Information über die erfasste Drehrate enthält.

Die Stellgrößentransformationseinheit 7 stellt nach Maßgabe der Gleichungen $u_1 = \sqrt{\tilde{u}_T - \tilde{u}_C + \tilde{u}_S}$,

$u_2 = \sqrt{\tilde{u}_T + \tilde{u}_C - \tilde{u}_S}$, $u_3 = \sqrt{\tilde{u}_T + \tilde{u}_C + \tilde{u}_S}$, $u_4 = \sqrt{\tilde{u}_T - \tilde{u}_C - \tilde{u}_S}$ die Trimmspannungen $u_1$, $u_2$, $u_3$ und $u_4$ bereit.

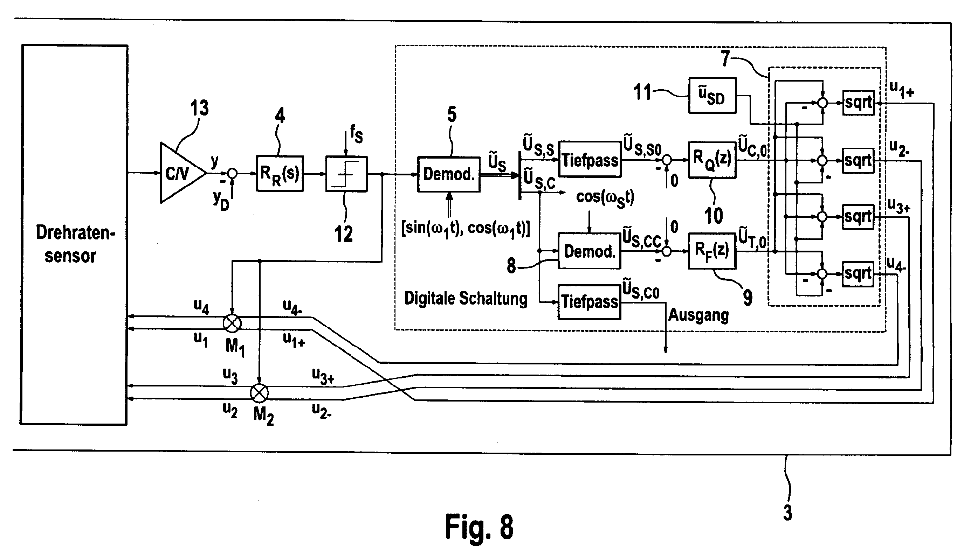

Anhand der Fig. 8 ist der Drehratensensor und damit auch das entsprechende Verfahren unter Einsatz des Sigma-Delta Modulators veranschaulicht. Dabei umfasst der Drehratensensor eine Regelungsanordnung 3, in der zunächst aus der Regelgröße y unter Vorgabe einer Regelführungsgröße eine Regelfehlergröße gebildet wird, wobei die Regelgröße y die erfasste Auslenkung der seismischen Masse in Richtung ihrer Sekundärmode repräsentiert, und wobei die Regelführungsgröße ein harmonisches Frequenzidentifikationssignal mit der Frequenz $\omega_s$ moduliert mit der Frequenz der Primärmode $\omega_1$ ist, wonach die so gebildete Regelfehlergröße einer ersten Reglereinheit 4 zugeführt wird, deren Ausgangssignal danach in einem Quantisierer 12 mit der Taktfrequenz $f_s$ digitalisiert wird und die dadurch erzeugte Bitfolge anschließend in digitaler Weise mit zwei zueinander um 90° phasenverschobenen harmonischen Signalen in einer ersten digitalen Demodulatoreinheit 5 demoduliert wird, wodurch eine Quadraturgröße $\tilde{U}_{S,S}$ und eine Drehratengröße $\tilde{U}_{S,C}$ gewonnen werden, wonach aus der Quadraturgröße in Abhängigkeit einer Quadraturführungsgröße, insbesondere mit dem Wert "0", eine Quadraturregelfehlergröße erzeugt wird, welche einer Quadraturreglereinheit 10 zugeführt wird, die ausgangsseitig die Quadraturstellgröße $\tilde{u}_C$, hier $\tilde{U}_{C,0}$ genannt, bereitstellt.

Die Drehratengröße $\tilde{U}_{S,C}$ wird in einer zweiten Demodulatoreinheit 8 mit der Frequenz $\omega_S$ demoduliert, wodurch eine Frequenzgröße $\tilde{U}_{S,CC}$ gewonnen wird, wonach aus der Frequenzgröße in Abhängigkeit einer Frequenzführungsgröße, insbesondere mit dem Wert "0" eine Frequenzregelfehlergröße erzeugt wird, die einer Frequenzreglereinheit 9 zugeführt wird, die ausgangsseitig die Resonanzfrequenzstellgröße $\tilde{u}_T$, hier $\tilde{U}_T$, 0 genannt, bereitstellt. Die Drehratengröße $\tilde{U}_{S,C}$ wird außerdem tiefpassgefiltert und bildet das Ausgangssignal $\tilde{U}_{S,C0}$ des Sensors, welches die Information über die erfasste Drehrate enthält.

Außerdem umfasst der Drehratensensor eine Rückstelleinheit 11, welche die Rückstellgröße $\tilde{U}_{SD}$ bereitstellt, beispielgemäß als definierten konstanten Rückstellwert.

Die Regelungsanordnung umfasst beispielgemäß einen Sigma-Delta-Wandler, mit welchem die Regelgröße digitalisiert wird und wonach die Resonanzfrequenzstellgröße, die Quadraturstellgröße und die Rückstellgröße als digitale Größen erzeugt werden. Der Sigma-Delta-Modulator, als elektro-mechanischer Sigma-Delta-Modulator ausgebildet, umfasst dabei einen Kapazitäts-Spannungs-Wandler 13, welcher eingangsseitig vor der ersten Reglereinheit 4 angeordnet ist, die erste Reglereinheit 4 selber, einen mit dieser ausgangsseitig verbundenen Quantisierer 12 mit der Abtastfrequenz $f_s$, sowie für die Rückführung der Regelung einen nicht dargestellten Digital-Analog-Wandler und einen nicht abgebildeten Spannungs-Kraft-Wandler.

Die erste und die vierte Trimmspannung $U_1$, $U_4$ werden mittels eines ersten Mischers M1 und die zweite und die dritte Trimmspannung $U_2$, $U_3$ mittels eines zweiten Mischers M2 verarbeitet, jeweils in Abhängigkeit des digitalen Ausgangssignals des Quantisierers 12.

Nachfolgend erfolgt beispielhaft eine Beschreibung und Analyse durch mathematische Darstellungen:

Typischerweise besitzen mikroelektromechanische Drehratensensoren zwei schwach gedämpfte, zueinander orthogonale mechanische Vibrationsmoden, die sog. primäre und sekundäre Mode, welche bei Auftreten einer Drehrate über den Corioliseffekt gekoppelt sind. Durch herstellungsbedingte Ungenauigkeiten tritt im Allgemeinen eine weitere Kopplung zwischen Primär- und Sekundärmode auf, Unwuchteffekt bzw. Quadratur. Im Ausgangssignal des Sensors weisen die Signalkomponenten zufolge des Coriolis- und des Unwuchteffektes allerdings einen Phasenunterschied von 90° auf. Durch eine entsprechende Demodulation kann das Ausgangssignal demnach in eine Drehraten- und eine Quadraturkomponente zerlegt werden. Das konventionelle Regelungskonzept von mikromechanischen Drehratensensoren umfasst daher typischerweise eine Quadraturregelung, welche die Signalkomponente zufolge des Unwuchteffektes mit Hilfe von zusätzlicher Aktorik kompensiert. Etwaige Offset-Driften der Drehratenkomponente im Ausgangssignal auf Grund von Demodulationsfehlern können dadurch vermieden werden. Um die Sensitivität zu erhöhen, werden in der Regel extrem schwach gedämpfte mechanische Strukturen eingesetzt. Das dadurch resultierende langsame dynamische Antwortverhalten des Sensors zufolge einer Drehrate kann verbessert werden, indem die Drehratenkomponente mit Hilfe weiterer geeigneter Aktoren in einer Rückstellregelung (auch Fesselungsbetrieb) kompensiert wird. Die gewünschte Sensordynamik wird dann durch den geschlossenen Kreis der Rückstellregelung vorgegeben. Die maximale Sensitivität des Drehratensensors wird erreicht, wenn die Resonanzfrequenzen der primären und sekundären Mode identisch sind. Da in der Nähe dieses Arbeitspunktes die Sensitivitätsänderung bereits bei geringen Parameterabweichungen sehr groß wird, ist eine Regelung der Resonanzfrequenz notwendig. Die vorliegende Erfindung behandelt bevorzugt den Entwurf eines Gesamtregelungskonzeptes, welches die Quadratur-, Rückstell- und Frequenzregelung umfasst.

Bei dem dieser Erfindung zugrundeliegenden Sensortyp handelt es zweckmäßigerweise sich um einen kapazitiven Drehratensensor. Hierbei erfolgen die Anregung und das Auslesen der Primär- bzw. Sekundärschwingung mittels kapazitiver Aktoren und Sensoren. Für das Weitere sei angenommen, dass mit Hilfe geeigneter kapazitiver Aktoren, bzw. Antriebseinrichtungen der Drehratensensor in der Primärmode in eine harmonische Schwingung mit konstanter Amplitude versetzt wird. Die Frequenz der Schwingung entspricht dabei der Resonanzfrequenz der Primärmode. Nimmt man weiterhin an, dass die Amplitude und Frequenz der Primärschwingung ideal auf einen konstanten Sollwert geregelt werden, so lässt sich die Rückwirkung der Sekundärauf die Primärschwingung vernachlässigen und die Bewegungsdifferentialgleichung der Sekundärmode in der Form

$$m_2 \ddot{q}_2 + d_2 \dot{q}_2 + k_2 q_2 = f_2(q_1, q_2, u_1, \ldots, u_m) + \Omega c_{21} \dot{q}_1 - k_{21} q_1 \qquad (1)$$

anschreiben. Dabei bezeichnen $q_1$ und $q_2$ die Primär- und Sekundärmode, $\Omega$ die Drehrate sowie $u_1,\ldots,u_m$ die Spannungen an den kapazitiven Aktoren zur Beeinflussung der Sekundärmode. Die positiven Konstanten $m_2$, $d_2$ und $k_2$ entsprechen dem Trägheits-, Dämpfungs- und Steifigkeitskoeffizienten, während die Konstanten $c_{21}$ und $k_{21}$, welche sowohl positive als auch negative Werte annehmen können, den Koppeltermen zufolge des Coriolis- und Unwuchteffektes entsprechen. Der nichtlineare Eingangsterm $f_2(q_1, q_2, u_1, \ldots, u_m)$ hängt von der Anordnung der kapazitiven Aktoren ab. Geht man von Parallelplattenkondensatoren aus, wie Fig. 1 gezeigt, können diese derart konzipiert werden, dass sowohl eine harmonische Anregung der Sekundärmode als auch eine Kompensation des Koppelterms $k_{21}q_1$ durch Anlegen einer konstanten Spannungskomponente möglich ist. Durch den Gleichanteil erfolgt außerdem eine inhärente Beeinflussung der Resonanzfrequenz der Sekundärmode. Zunächst sei angenommen, dass nur Parallelplattenkondensatoren mit rechteckförmigen Elektroden betrachtet werden. Bei einer Anzahl von $m$ derartigen kapazitiven Aktoren zeigt Fig. 1 den $\ell$-ten Aktor, $\ell = 1,\ldots,m$, bestehend aus einer starr mit dem Gehäuse verbundenen Elektrode und einer beweglichen Elektrode. Die bewegliche Elektrode besitzt die translatorischen Freiheitsgrade $x_i$ und $z_i$, wobei $x_i$ und $z_i$ die Bewegung des Mittelpunktes der beweglichen Elektrode in Richtung der Primärmode bzw. der Sekundärmode beschreiben, d.h. wenn keine anderen Moden angeregt werden gilt $x_i = \pm r_i q_1$ und $z_i = \pm s_i q_2$ mit den positiven Konstanten $r_i$ und $s_i$. Die Kapazität $C_i$ und die gespeicherte Energie $W_{p,i}$ des $i$-ten Aktors ergibt sich nun zu

$$C_i = \varepsilon_0 \frac{A_i + x_i t_i}{g_i - z_i} = \varepsilon_0 \frac{A_i \pm r_i t_i q_1}{g_i \pm s_i q_2}, \qquad W_{p,i} = \frac{1}{2} C_i u_i^2 \qquad (2)$$

mit der elektrischen Spannung $u_i$, der Dielektrizitätskonstanten $\varepsilon_{\bar{u}}$, dem Spalt $g_i$, der Überlapplänge $l_i$, der Tiefe $t_i$ und der Überlappfläche $A_i = l_i t_i$ im unverformten Zustand. Die gesamte eingeprägte Kraft der kapazitiven Aktoren, $f_2$ in (1), berechnet sich in der Form

$$f_{2,i} = \frac{\partial W_{p,i}}{\partial q_2} = \mp \frac{1}{2} \frac{\varepsilon_0 s_i (A_i \pm r_i t_i q_1)}{(g_i \pm s_i q_2)^2} u_i^2, \qquad f_2(q_1, q_2, u_1, \ldots, u_m) = \sum_{i=1}^{m} f_{2,i}. \qquad (3)$$

Aus (2) und (3) erkennt man, dass je nach geometrischer Anordnung des kapazitiven Aktors eine Kraftwirkung auf die Sekundärmode ausgeübt werden kann, welche vier unterschiedliche Vorzeichen-Permutationen aufweist, nämlich für $x_i = \pm r_i q_1$ und $z_i = \pm s_i q_2$.

Nimmt man zunächst an, dass genau vier kapazitive Aktoren existieren, welche unterschiedliche Vorzeichen-Permutationen besitzen, dann gilt für die Kraft auf die Sekundärmode

$$f_2 = \frac{\varepsilon_0}{2}\left(\frac{s_1(A_1 + r_1 t_1 q_1)}{(g_1 - s_1 q_2)^2}u_1^2 - \frac{s_2(A_2 + r_2 t_2 q_1)}{(g_2 + s_2 q_2)^2}u_2^2 + \frac{s_3(A_3 - r_3 t_3 q_1)}{(g_3 - s_3 q_2)^2}u_3^2 \right.$$
$$\left. - \frac{s_4(A_4 - r_4 t_4 q_1)}{(g_4 + s_4 q_2)^2}u_4^2\right). \tag{4}$$

Eine bevorzugte Ausbildung des Regelungskonzeptes stellt nun die Eingangsgrößentransformation

$$u_1 = \sqrt{\tilde{u}_T - \tilde{u}_C + \tilde{u}_S}, \qquad u_2 = \sqrt{\tilde{u}_T + \tilde{u}_C - \tilde{u}_S},$$
$$u_3 = \sqrt{\tilde{u}_T + \tilde{u}_C + \tilde{u}_S}, \qquad u_4 = \sqrt{\tilde{u}_T - \tilde{u}_C - \tilde{u}_S} \tag{5}$$

dar. Setzt man die Transformation (5) in (4) ein und linearisiert den Ausdruck $f_2$ nach $q_1$ und $q_2$ um den Arbeitspunkt $q_1 = 0$ und $q_2 = 0$, so erhält man eine näherungsweise Beziehung gültig für kleine Auslenkungen. Unter der Annahme, dass der Spalt für alle Parallelplattenkondensatoren gleich groß ist, d.h. $g = g_j$, sowie folgende geometrische Beziehungen erfüllt sind $sA = s_j A_j$, $rst = r_j s_j t_j$ und $s^2 A = s_j^2 A_j$ für $j = 1, ..., m$, welche als Symmetriebedingungen für die gewichteten Überlappflächen und -längen interpretiert werden können, ergibt sich die lineare Approximation in der Form

$$f_2 \cong \underbrace{\frac{2\varepsilon_0 s_j A_j}{g^2}}_{b_2}\tilde{u}_S - \underbrace{\frac{2\varepsilon_0 r_j s_j t_j}{g^2}}_{k_{21,C}}q_1\tilde{u}_C + \underbrace{\frac{4\varepsilon_0 s_j^2 A_j}{g^3}}_{k_{2,T}}q_2\tilde{u}_T. \tag{6}$$

Aus (6) erkennt man, dass die transformierten Eingangsgrößen nun voneinander entkoppelt sind. Gleichung (1) kann nun in der Form

$$m_2\ddot{q}_2 + d_2\dot{q}_2 + \left(k_2 - k_{2T}\tilde{u}_T\right)q_2 = b_2\tilde{u}_S + \Omega c_{21}\dot{q}_1 - \left(k_{21} + k_{21,C}\tilde{u}_C\right)q_1 \tag{7}$$

angeschrieben werden. Es zeigt sich unmittelbar in (7), dass der Eingang $\tilde{u}_S$ zur harmonischen Anregung der Sekundärmode, der Eingang $\tilde{u}_C$ zur Kompensation der Unwucht und der Eingang $\tilde{u}_T$ zum Trimmen der Resonanzfrequenz der Sekundärmode herangezogen werden kann.

Im bisher Gesagten wurde die einschränkende Annahme getroffen, dass alle kapazitiven Aktoren rechteckförmige Elektroden und keine rotatorischen Freiheitsgrade besitzen. Nun lässt sich das obige Konzept sehr einfach auf beliebig geformte Elektroden erweitern, die sich aus einer finiten Anzahl hinreichend kleiner rechteckförmiger Elemente darstellen lassen. Unter der Annahme einer Unterteilung in hinreichend kleine Elemente lässt sich somit auch die Kraftwirkung von beliebig geformten rotierenden Elektroden in der obigen Form approximieren. Weiterhin wird angenommen, dass die finiten Aktorelemente zu vier Gruppen $k = 1, ..., 4$ mit der Anzahl $m_k$ an Elementen mit gemeinsamer Vorzeichen-Permutation zusammengefasst und mit der Spannung $u_k$ versorgt werden. Erfüllen die verteilten Aktoren die geometrischen Beziehungen

$$sA = \sum_{j=1}^{m_1} s_{1,j}A_{1,j} = \sum_{j=1}^{m_2} s_{2,j}A_{2,j} = \sum_{j=1}^{m_3} s_{3,j}A_{3,j} = \sum_{j=1}^{m_4} s_{4,j}A_{4,j},$$

$$rst = \sum_{j=1}^{m_1} r_{1,j}s_{1,j}t_{1,j} = \sum_{j=1}^{m_2} r_{2,j}s_{2,j}t_{2,j} = \sum_{j=1}^{m_3} r_{3,j}s_{3,j}t_{3,j} = \sum_{j=1}^{m_4} r_{4,j}s_{4,j}t_{4,j},$$

$$s^2 A = \sum_{j=1}^{m_1} s_{1,j}^2 A_{1,j} = \sum_{j=1}^{m_2} s_{2,j}^2 A_{2,j} = \sum_{j=1}^{m_3} s_{3,j}^2 A_{3,j} = \sum_{j=1}^{m_4} s_{4,j}^2 A_{4,j} \; ,$$

so lässt sich die gesamte Kraft auf die Sekundärmode mit

$$b_2 = 2 \frac{\varepsilon_0}{g^2} s A \; , \qquad k_{21,C} = 2 \frac{\varepsilon_0}{g^2} r s t \; , \qquad k_{2,T} = 4 \frac{\varepsilon_0}{g^3} s^2 A$$

wiederum in der Form (6) approximieren.

Für den eigentlichen, beispielhaften Reglerentwurf bedient man sich eines sogenannten Hüllkurvenmodells, welches die Dynamik der Fourier-Koeffizienten der Systemgrößen beschreibt. Dazu nimmt man zunächst an, dass die Primärmode eine harmonische Schwingung in der Form $q_1 = Q_{1S} \sin(\omega_1 t)$ mit der konstanten Amplitude $Q_{1,S}$ und der Frequenz $\omega_1$, welche der Eigenfrequenz der Primärmode entspricht, vollführt. Weiterhin nimmt man an, dass die Sekundärmode sich als eine harmonische Schwingung der Form $q_2 = Q_{2,S} \sin(\omega_1 t) + Q_{2,C} \cos(\omega_1 t)$ darstellen lässt. Bei einer harmonischen Anregung mit dem Eingang $\tilde{u}_S = \tilde{U}_{S,C} \cos(\omega_1 t)$ sowie den konstanten Eingängen $\tilde{u}_T = \tilde{U}_{T,0}$ und $\tilde{u}_C = \tilde{U}_{C,0}$ lässt sich die Dynamik der Fourier-Koeffizienten $Q_{2,S}$ und $Q_{2,C}$ mit Hilfe des Differenzialgleichungssystems

$$\frac{d}{dt} \begin{bmatrix} Q_{2,S} \\ Q_{2,C} \end{bmatrix} = \begin{bmatrix} \alpha_2 & \omega_1 - \omega_2 \\ -\omega_1 + \omega_2 & \alpha_2 \end{bmatrix} \begin{bmatrix} Q_{2,S} \\ Q_{2,C} \end{bmatrix} + \begin{bmatrix} \beta_{21} \Omega - \beta_2 \tilde{U}_{S,C} \\ \beta_{21} (\Gamma_M + \Gamma_C \tilde{U}_{C,0}) + \beta_2 \tilde{U}_{S,S} \end{bmatrix} \qquad (8)$$

mit dem Dämpfungsparameter und der Eigenfrequenz der Sekundärmode

$$\alpha_2 = -\frac{1}{2} \frac{d_2}{m_2} \; , \qquad \omega_2 = \sqrt{\frac{k_2 + k_{2,T} \tilde{U}_{T,0}}{m_2} - \alpha_2^2} \qquad (9)$$

sowie den Eingangs- und Unwuchtparametern

$$\beta_2 = \frac{1}{2} \frac{b_2}{m_2 \omega_2} \; , \qquad \beta_{21} = \frac{1}{2} \frac{\omega_1}{\omega_2} \frac{c_{21}}{m_2} Q_{1,S} \; , \qquad \Gamma_M = \frac{k_{21}}{\omega_1 c_{21}} \; , \qquad \Gamma_C = \frac{k_{21,C}}{\omega_1 c_{21}} \qquad (10)$$

und den Eingängen $\tilde{U}_{T,0}$, $\tilde{U}_{C,0}$, $\tilde{U}_{S,S}$ und $\tilde{U}_{S,C}$ beschreiben. Im Folgenden werden die harmonisch oszillierenden Systemgrößen $(q_2, \tilde{u}_s, ...)$ als "schnelle" Signale und die zugehörigen Fourier-Koeffizienten $(Q_{2,S} \; Q_{2,C}, \tilde{U}_{S,S}, \tilde{U}_{S,C}, ...)$ als "langsame" Signale bezeichnet.

Für den Betrieb des Drehratensensors kann zwischen dem sog. "Split-Mode" und dem "Matched-Mode" unterschieden werden. Im Split-Mode Betrieb ist der Eingang $\tilde{U}_{T,C}$ konstant und der Betrag der Frequenzdifferenz nimmt einen konstanten Wert $|\omega_1 - \omega_2| \gg 1$ an. Da für eine hinreichend große Frequenzdifferenz die Änderung der Sensitivität zufolge von unterschiedlichen Dämpfungsparametern $d_2$ und damit $\alpha_2$ keine wesentliche Rolle spielt, ist eine Regelung der sekundären Eigenfrequenz nicht notwendig und eine offline-Identifikation der Parameter $\alpha_2$ und $\omega_1 - \omega_2$ ausreichend. Im Matched-Mode Betrieb hingegen wird ein möglichst kleiner Frequenzabstand $\omega_1 - \omega_2 \to 0$ angestrebt. Die Sensitivitätsänderung besitzt ihr Maximum in der Nähe des Punktes $\omega_1 = \omega_2$, weshalb eine Frequenzregelung und eine online-Identifikation des Frequenzabstandes $\omega_1 - \omega_2$ unumgänglich ist.

Da das Ausgangssignal $y = c_2 q_2$ sowohl zur Rückstellung der unbekannten Drehrate als auch zur Kompensation der unbekannten Unwucht verwendet wird, kann aus dem Ausgangssignal keine weitere Information, z.B. über die Frequenzdifferenz, gewonnen werden. Dazu ist eine zusätzliche Anregung der Sekundärmode notwendig, welche Frequenzanteile im Spektrum enthält, die unterschiedlich von der Eigenfrequenz $\omega_1$ sind. Eine einfach realisierbare Möglichkeit ist eine harmonische Anregung mit der Frequenz $\omega_s = \omega_1/l$ und $l \gg 1$.

Nimmt man also Eingangsgrößen des Hüllkurvenmodells (8) der Form $\tilde{U}_{SS} = \tilde{U}_{S,S0} + \tilde{U}_{S,SS} \sin(\omega_s t) + \tilde{U}_{S,SC} \cos(\omega_s t)$ und $\tilde{U}_{S,C} = \tilde{U}_{S,C0} + \tilde{U}_{S,CS} \sin(\omega_s t) + U_{S,CC} \cos(\omega_s t)$ sowie entsprechende Zustandsgrößen $Q_{2S} = Q_{2,S0} + Q_{2SS} \sin(\omega_s t) + Q_{2,SC} \cos(\omega_s t)$ und $Q_{2,C} = Q_{2,C0} + Q_{2,CS} \sin(\omega_s t) + Q_{2,CC} \cos(\omega_s t)$ an, so lässt sich unter Vernachlässigung der Koppelterme zur Primärmode die Dynamik der neuen Fourier-Koeffizienten $Q_{2,SS}$, $Q_{2,SC}$, $Q_{2,CS}$ und $Q_{2,CC}$ (SC-Subsystem) durch ein Hüllkurvenmodell der Form

$$\frac{d}{dt}\begin{bmatrix} Q_{2,SS} \\ Q_{2,SC} \\ Q_{2,CS} \\ Q_{2,CC} \end{bmatrix} = \begin{bmatrix} \alpha_2 & \omega_S & \omega_1 - \omega_2 & 0 \\ -\omega_S & \alpha_2 & 0 & \omega_1 - \omega_2 \\ -\omega_1 + \omega_2 & 0 & \alpha_2 & \omega_S \\ 0 & -\omega_1 + \omega_2 & -\omega_S & \alpha_2 \end{bmatrix} \begin{bmatrix} Q_{2,SS} \\ Q_{2,SC} \\ Q_{2,CS} \\ Q_{2,CC} \end{bmatrix}$$

$$+ \begin{bmatrix} 0 & 0 & -\beta_2 & 0 \\ 0 & 0 & 0 & -\beta_2 \\ \beta_2 & 0 & 0 & 0 \\ 0 & \beta_2 & 0 & 0 \end{bmatrix} \begin{bmatrix} \tilde{U}_{S,SS} \\ \tilde{U}_{S,SC} \\ \tilde{U}_{S,CS} \\ \tilde{U}_{S,CC} \end{bmatrix} \cdot$$

$$(11)$$

angeben. Die Dynamik der Fourier-Koeffizienten $Q_{2,S0}$ und $Q_{2C0}$ (0-Subsystem) wird durch das Hüllkurvenmodell

$$\frac{d}{dt}\begin{bmatrix} Q_{2,S0} \\ Q_{2,C0} \end{bmatrix} = \begin{bmatrix} \alpha_2 & \omega_1 - \omega_2 \\ -\omega_1 + \omega_2 & \alpha_2 \end{bmatrix} \begin{bmatrix} Q_{2,S0} \\ Q_{2,C0} \end{bmatrix} - \begin{bmatrix} \beta_{21}\Omega - \beta_2\tilde{U}_{S,C0} \\ \beta_{21}(\Gamma_M + \Gamma_C\tilde{U}_{C,0}) + \beta_2\tilde{U}_{S,S0} \end{bmatrix} \quad (12)$$

beschrieben.

Im Weiteren wird nun angenommen, dass das "schnelle" Ausgangssignal $y = c_2 q_2$ durch einen robusten Regler $R_R(s)$ auf einen harmonischen Sollwert $y_D = Y_{CC}^+ \cos(\omega_S t)\cos(\omega_1 t)$ geregelt wird, mit $\omega_S = \omega_1/l$ und $l \gg 1$. Geht man zunächst davon aus, dass diese unterlagerte Rückstellregelung ideal ist und der Ausgang $y$ dem Sollwert $y_D$ exakt folgt, d.h. es gilt $Q_{2SS} = 0$, $Q_{2SC} = Q_{2,CS} = 0$ und $Q_{2,CC} = Y_{CC}^+/c_2$, so erhält man die Eingangsgröße $U_S = [\tilde{U}_{S,S}\ \tilde{U}_S,C]^T$ im eingeschwungenen Zustand aus (11) und (12) in der Form

$$\tilde{U}_{S,C} = \underbrace{\frac{\beta_{21}}{\beta_2}\Omega}_{\bar{U}_{S,C0}} + \underbrace{\frac{\omega_1 - \omega_2}{\beta_2 c_2}Y_{CC}^+ \cos(\omega_S t)}_{\bar{U}_{S,CC}},$$

$$(13)$$

$$\tilde{U}_{S,S} = -\underbrace{\frac{\Gamma_M}{\Gamma_C}}_{\bar{U}_{S,S0}} - \underbrace{\frac{\omega_S}{\beta_2 c_2}Y_{CC}^+ \sin(\omega_S t)}_{\bar{U}_{S,SS}} - \underbrace{\frac{\alpha_2}{\beta_2 c_2}Y_{CC}^+ \cos(\omega_S t)}_{\bar{U}_{S,SC}}.$$

Die einzelnen Komponenten $\tilde{U}_{S,CC}$, $\tilde{U}_{S,CC}$ und $\tilde{U}_{S,S0}$ können durch Demodulation der Stellgröße $\tilde{u}_S$ gewonnen werden, wie in Fig. 2 gezeigt. Der Fourier-Koeffizient $\tilde{U}_{S,C0}$ in (13) ist proportional zur Drehrate und dient daher als Ausgang des Drehratensensors.

Die eigentliche Quadraturregelung erfolgt nun durch Kompensation der Größe $\tilde{U}_{SS0}$ mit Hilfe der Eingangsgröße $\tilde{U}_{C,0}$.

Die für den Entwurf des Quadraturreglers $R_Q(s)$ zugrundeliegende Strecke vom Eingang $\tilde{U}_{C,0}$ zum Ausgang $\tilde{U}_{S,S0}$ ist gegeben durch die stationäre Beziehung

$$G_Q = -\frac{\beta_{21}\Gamma_M}{\beta_2} . \quad (14)$$

Weiterhin erkennt man aus (13), dass der Fourier-Koeffizient $\tilde{U}_{S,CC}$ linear von der Frequenzdifferenz $\omega_1 - \omega_2$

abhängig ist. Die Frequenzdifferenz kann also in der Form $\omega_1 - \omega_2 = \tilde{U}_{S,CC}\beta_2 c_2 / Y_{CC}^*$ berechnet werden. Die Frequenzregelung hat nun die Aufgabe, den Fourier-Koeffizienten $\tilde{U}_{S,CC}$ auf Null zu regeln. Die für die Frequenzregelung mit dem Regler $R_F(s)$ zugrundeliegende Übertragungsfunktion der um den Arbeitspunkt $\omega_1 = \omega_2$ linearisierten Strecke vom Eingang $\tilde{U}_{T,0}$ zum Ausgang $\tilde{U}_{S,CC}$ ist durch die stationäre Beziehung

$$G_s = \left.\frac{\partial \tilde{U}_{S,CC}}{\partial \tilde{U}_{T,0}}\right|_{\omega_2 = \omega_1} = -\frac{1}{2}\frac{k_{2T}}{\beta_2 c_2 m_2 \omega_1} Y_{CC}^* \qquad (15)$$

gegeben. Die zugehörige kaskadierte Regelungsstruktur ist in Fig. 2 dargestellt.

In der Realität ist die Übertragungsfunktion des geschlossenen Kreises der unterlagerten Rückstellregelung nicht exakt gleich eins. Die Antwort auf die harmonische Sollwertvorgabe weist dann im eingeschwungenen Zustand eine Phasenverschiebung $\varphi_C$ und Amplitudenänderung $A_C$ auf, welche bei der anschließenden Demodulation korrigiert werden kann indem anstelle von $\cos(\omega_S t)$ mit $A_c\cos(\omega_S t + \varphi_c)$ demoduliert wird.

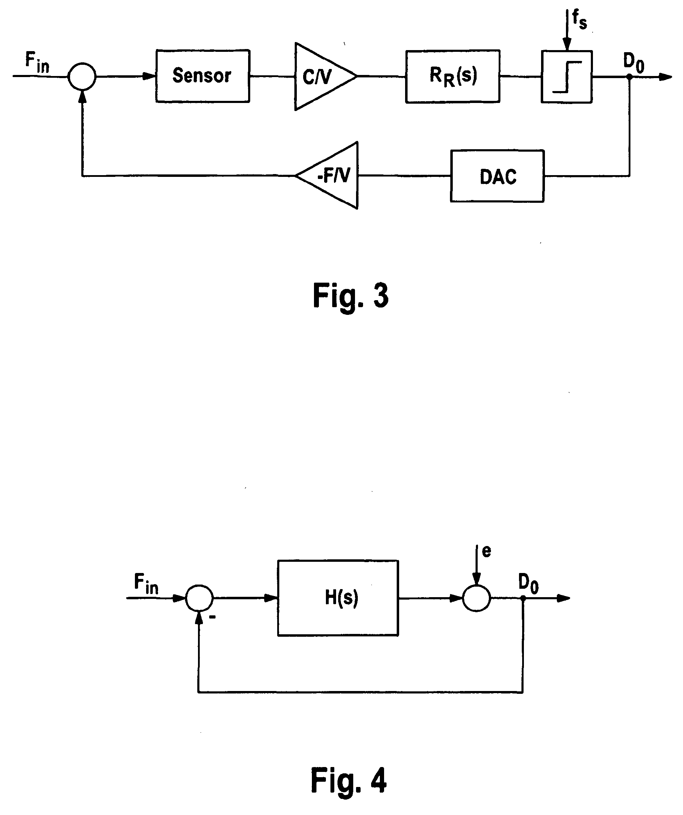

Das beispielhafte Auslesen eines Sensors mittels eines elektro-mechanischen Sigma-Delta (SD) Modulators im Fesselungsbetrieb (Rückstellregelung) bietet viele Vorteile gegenüber konventionellen Auslesesystemen ohne gefesselten Betrieb. Durch den gefesselten Betrieb lassen sich unter anderem die Bandbreite, der Dynamikbereich und die Linearität verbessern. Der Aufbau eines elektro-mechanischen SD-Modulators ist in Fig. 3 gezeigt und besteht aus einem Sensor, dem Kapazitäts-Spannungs-Wandler (C/V), dem Filter bzw. die erste Reglereinheit $R_R(s)$, welcher dem oben beschriebenen Rückstellregler entspricht, einem Quantisierer mit einer Abtastfrequenz $f_S$, dem Digital-Analog-Umsetzer (DAC) und einem Spannungs-Kraft-Wandler (-F/V). Die Stabilität des geschlossenen Kreises wird durch eine geeignete Dimensionierung des Filters erreicht. In Fig. 4 ist ein vereinfachter Regelkreis gezeigt mit einem Eingang $F_m$, einer Übertragungsfunktion $H(s)$, welche das System bestehend aus Sensor und Filter $R_R(s)$ abbildet, dem Quantisierungsrauschen $e$ und einem Ausgang $D_c$ welcher rückgekoppelt wird. Das Ausgangssignal ergibt sich für den geschlossenen Kreis im Laplace-Bereich zu

$$D_Q = F_m \underbrace{\frac{1}{1 + \frac{1}{H(s)}}}_{STF} + e \cdot \underbrace{\frac{1}{1 + H(s)}}_{NTF} . \qquad (16)$$

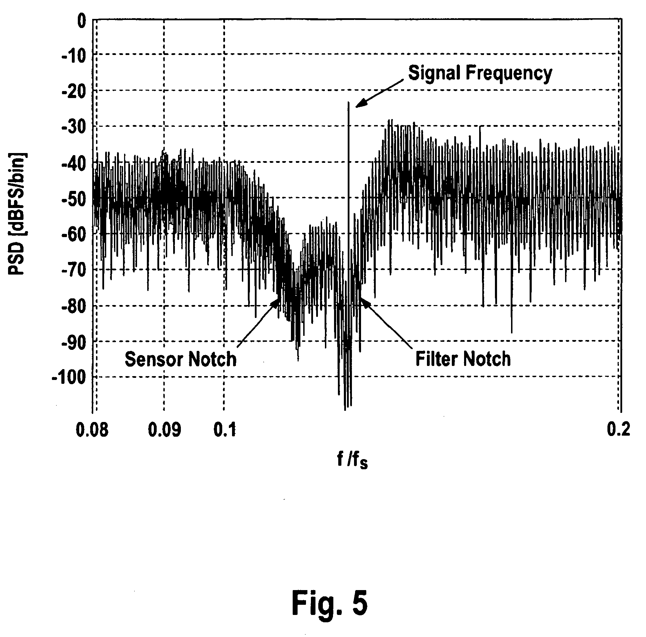

Anhand der Signalübertragungsfunktion (STF) und der Rauschübertragungsfunktion (NTF) in (16) lässt sich erkennen, dass im Signalband eine große Verstärkung des Filters wünschenswert ist, um einerseits das Eingangssignal $F_m$ mit eins zum Ausgang $D_0$ hin zu übertragen (d.h. man kann nun für den weiteren Reglerentwurf - wie in weiter oben erläutert - von einer idealen Rückstellregelung ($y = y_D$) ausgehen) und andererseits das Quantisierungsrauschen zu unterdrücken. Bei Drehratensensoren lässt sich vorzugsweise ein Bandpassfilter verwenden mit einer Resonanzfrequenz die der primären Resonanzfrequenz des Drehratensensors entspricht. In Fig. 5 ist ein Spektrum des vorgestellten SD-Modulators gezeigt. Es sind zwei lokale Minima im Spektrum zu erkennen, das rechte resultiert aus dem Bandpassfilter und das linke aus der Übertragungsfunktion des Drehratensensors zufolge der Sekundärmode. Hier wird sofort ersichtlich, dass sich die Güte erheblich verbessern lässt, wenn die beiden lokalen Minima übereinander liegen.

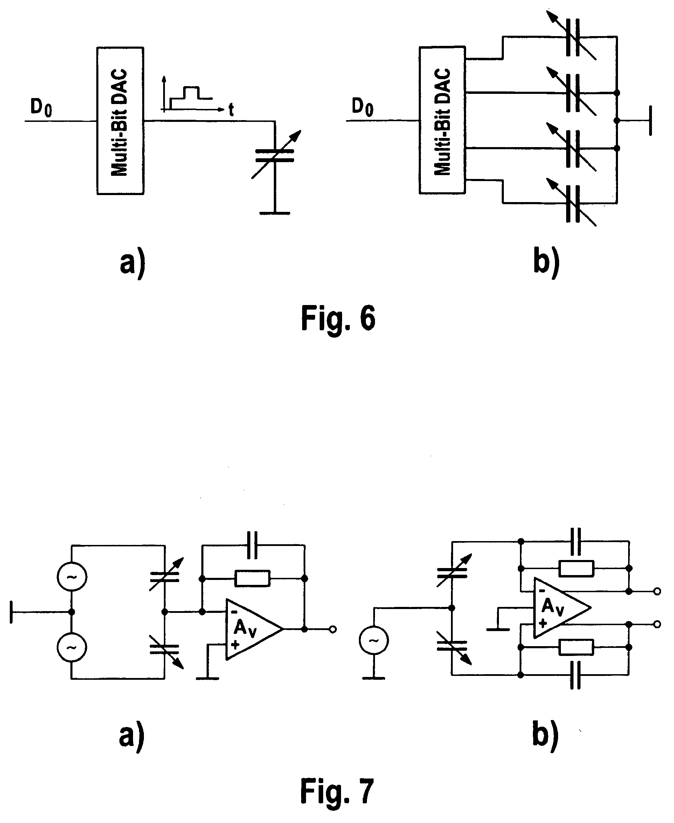

Beim SD-Modulator wird das digitale Ausgangssignal über einen DAC auf das Sensorelement zurückgeführt. Durch die aktive Rückkopplung wird die Linearität des Sensors verbessert. Dadurch wird bewirkt, dass das Messsignal am Eingang möglichst kompensiert wird und somit der Sensor im Idealfall ein verschwindendes Differenzsignal erfährt. Im Falle des SD Prinzips sollte die Aussage dahingehend modifiziert werden, dass das zu messende Signal im Mittel kompensiert wird und sich auf den Sensor nur der Fehler als Eingangssignal auswirkt. Durch die Verwendung von Multi-Bit Lösungen kann die Varianz zwischen Eingangs- und Ausgangssignal verringert und damit die Güte des Gesamtsystems in Bezug auf Linearität verbessert werden. Die Rückkopplung erfolgt kapazitiv über ein pulsweitenmoduliertes Signal, ein Single oder Multi-Bit Spannungssignal oder ein Single oder Multi-Bit Ladungssignal. Die Multi-Bit Rückkopplung kann entweder durch einen speziellen DA Wandler erreicht werden, welcher eine implizite Linearisierung der Rückkopplungskraft durchführt wie in Fig. 6a, oder durch die Verwendung von mehreren Rückkopplungselektroden wie in Fig. 6b zu sehen ist.

Durch die Verwendung von zeitkontinuierlichen SD Wandlern kann die Leistungsaufnahme in signifikanter Weise reduziert werden. Dies ist möglich, da die RC Technik geringere Bandbreiten für die Operationsverstärker (OPV) fordert. Im Vergleich zur Schalter-Kondensator Technik kann dies eine bis zu einem Faktor 10 geringere Bandbreite sein. Dadurch lässt sich ebenfalls die Stromaufnahme um denselben Faktor reduzieren. Für die zeitkontinuierliche Auswerteschaltung können zwei unterschiedliche Ansätze gewählt werden. Der erste basiert auf dem Abgreifen des Signals von der Mittenelektrode, wie in Fig. 7a zu sehen ist. Dieser Ansatz bietet den Vorteil, dass nur ein Verstärker für die Auswerteschaltung benötigt wird. Nachteile dieser Methode sind die komplizierte Erzeugung des Modulationssignals, welches um exakt 180° phasenverschoben sein sollte, und dass durch die Rückkopplung keine zusätzlichen Signale auf die Mittenelektrode übertragen werden dürfen. Aus diesen Gründen wird auch häufig ein voll differentieller Aufbau gewählt, welcher die vorgenannten Nachteile nicht aufweist und in Fig. 7b dargestellt ist. Als dritte Alternative kann für jede Kapazität ein eigener Verstärker gewählt werden. Dies führt aber zu einer großen Anzahl von Verstärken und einer Vergrößerung der Chipfläche.

In diesem Abschnitt wird das oben vorgestellte Regelungskonzept und der Sigma-Delta Modulator vereint zu einem weiteren, anhand der Fig. 8 veranschaulichten Ausführungsbeispiel. In dem digitalen Regelungsblock wird das Signal $\tilde{u}_S$ durch $\tilde{u}_{SD}$ versetzt. Das Signal $\tilde{u}_{SD}$ definiert die Kraftrückkopplung des Sigma-Delta Modulators und kann zu einem konstanten Wert gesetzt werden. Mittels der beschriebenen Eingangsgrößentransformation wird eine gegenseitige Beeinflussung der drei unterschiedlichen Stellgrößen $\tilde{u}_{SD}$, $\tilde{U}_{C,0}$ und $\tilde{U}_{T,0}$ verhindert. Die vier Spannungen $u_1+$, $u_{2-}$, $u_{3+}$ und $u_{4-}$ werden über die Mischer M1 und M2 auf die entsprechenden Elektroden der kapazitiven Aktoren des Drehratensensors eingeprägt. Dabei sind $u_{1+}$ und $u_{4-}$ sowie $u_{2-}$ und $u_{3+}$ bzgl. der Stellgrößen $\tilde{U}_{C,0}$ und $\tilde{U}_{T,0}$ gleich und unterscheiden sich nur durch den Kraftrückkoppelwert $\tilde{u}_{SD}$. Der Sigma-Delta Modulator besteht aus einem Kapazitäts-Spannungs-Wandler (C/V), einem Schleifenfilter ($R_R$(s)), einem 1-bit Quantisierer, welcher mit einer Abtastfrequenz $f_S$ getaktet ist, sowie einer Kraftrückkopplung (DAC) definiert durch die beiden Mischer M1 und M2. Mit dem Ausgangssignal des Sigma-Delta Modulators werden die beiden Mischer M1 und M2 angesteuert. Die Kraftrückkopplung auf den Sensor durch die Spannungen $u_1$, $u_2$, $u_3$ und $u_4$ erfolgt somit durch das Umschalten zwischen den aktuellen Pegeln der Signale $u_{1+}$ und $u_{4-}$ bzw. $u_{2-}$ und $u_{3+}$.

Durch die Kombination der Quadratur- und Frequenzregelung sowie des Sigma-Delta Modulators lassen sich die Vorteile der jeweiligen Konzepte, wie in den vorgegangenen Abschnitten beispielhaft beschrieben, kombinieren.

Ein besonders vorteilhaftes Merkmal des Verfahrens und des Drehratensensors stellt die nichtlineare Eingangsgrößentransformation (5) dar sowie die Verwendung eines zeitkontinuierlichen elektro-mechanischen Sigma-Delta Modulators.

Die Verwendung des zeitkontinuierlichen SD Wandlers zum Auslesen von Sensoren bringt verschiedenste Vorteile. Als erster Vorteil ist der reduzierte Leistungsverbrauch im Vergleich zur Schalterkondensatortechnik zu nennen. Dadurch, dass zeitkontinuierliche Signale verwendet werden, benötigen die verwendeten Operationsverstärker bis zu einem Faktor 10 weniger Bandbreite und damit bis zu einem Faktor 10 weniger Strom. Dies führt zu einem drastisch geringeren Energieverbrauch, welcher eine besondere Rolle gerade in dem stark wachsenden Markt der mobilen Sensorik besitzt. Des Weiteren besitzen zeitkontinuierliche SD Wandler einen impliziten Antialiasing Filter, welcher Frequenzen oberhalb von $f_S/2$ filtert. Zwar besitzt der Sensor schon ein Tiefpassverhalten, doch reduziert dieser nicht in ausreichendem Maße Frequenzen oberhalb der Nyquist- Frequenz und die Eigenschaften dieses Filters sind auch nicht frei einstellbar. Die Eigenschaften zeitkontinuierlicher SD Wandler reduziert den Schaltungsaufwand und die Kosten sowie den erforderlichen Stromverbrauch. Des Weiteren wirkt durch die fehlende zyklische Umladung der Ausleseelektroden auf die Testmasse eine geringere Auslesekraft, was zu einer Erhöhung des Signal-Rauschabstandes führt und damit zu einer verbesserten Auflösung.

Konventionelle Verfahren zur Regelung der sekundären Resonanzfrequenz von kapazitiven Drehratensensoren verzichten auf die Kompensation der inhärenten quadratischen Eingangsnichtlinearität. Falls eine Quadratur- und/oder Rückstellregelung für den Betrieb des Drehratensensors benötigt wird, hat dies zur Folge, dass sich die Frequenzregelung sowie die Quadratur- und Rückstellregelung gegenseitig beeinflussen. Da insbesondere im Fall einer Rückstellregelung das Ausgangssignal des Drehratensensors der benötigten Stellgröße zur Rückstellung der Drehrate entspricht, tritt hier das Problem auf, dass die Ausgangsgröße des Drehratensensors direkt von der Frequenzregelung beeinflusst wird. Wenn sich also die sekundäre Resonanzfrequenz, z.B. aufgrund von Temperatureinflüssen, ändert und die Frequenzregelung die dadurch entstehende Regelabweichung kompensiert, tritt auch eine Änderung des Ausgangssignals auf. Dieser unerwünschte Effekt kann durch die vorgeschlagene Eingangsgrößentransformation vermieden werden, sodass aufwändige Korrekturen mittels Kennlinienfelder nicht erforderlich sind.

Für das vollständig entkoppelte Gesamtsystem mit den neuen transformierten Eingangsgrößen ($\tilde{u}_T$, $\tilde{u}_C$ und $\tilde{u}_S$) können die Frequenzregelung sowie die Quadratur- und Rückstellregelung unabhängig voneinander entworfen werden. Das vorgeschlagene Regelungskonzept besitzt den Vorteil, dass keine Demodulation des Ausgangssignals und damit keine Entkopplung von Quadratur- und Drehratensignal mehr nötig ist, vorausgesetzt der "schnelle" Rückstellregler ist hinreichend robust gegenüber Parameteränderungen (insbesondere der sekundären Resonanzfrequenz) ausgelegt. Eine Zerlegung in eine Quadratur- und Drehratenkomponente erfolgt durch Demodulation der Stellgröße der Rückstellregelung. Außerdem hat das vorgeschlagene Regelungskonzept den Vorteil eines linearen Zusammenhanges zwischen der Resonanzfrequenz und dem zugehörigen Messsignal $(\widetilde{U}_{S,CC} = Y_{2,CC}^* (\omega_1 - \omega_2)/(\beta_2 c_2))$ und ermöglicht damit einen beliebig großen stabilen Einzugsbereich für die Frequenzregelung.

**Patentansprüche**

1. Verfahren zum präzisen Messbetrieb eines mikromechanischen Drehratensensors, umfassend wenigstens eine seismische Masse, zumindest eine Antriebseinrichtung zum Antreiben der seismischen Masse in der Primärmode (q1) und vier Trimm-Elektrodenelemente (1), welche der seismischen Masse direkt oder indirekt gemeinsam zugeordnet sind, wobei jeweils zwischen den einzelnen dieser Trimm-Elektrodenelemente (1) und der seismischen Masse eine elektrische Trimmspannung ($u_1$, $u_2$, $u_3$, $u_4$) angelegt wird, wobei jede dieser elektrischen Trimmspannungen ($u_1$, $u_2$, $u_3$, $u_4$) in Abhängigkeit einer Resonanzfrequenzstellgröße ($\tilde{u}_T$, $Ü_{T,0}$), einer Quadraturstellgröße ($\tilde{u}_C$, $Ü_{C,0}$) und einer Rückstellgröße ($\tilde{u}_S$) eingestellt werden, wobei der Drehratensensor eine Regelungsanordnung (3) umfasst und wobei die Regelungsanordnung (3) einen Sigma-Delta-Wandler umfasst, mit welchem eine die erfasste Auslenkung der seismischen Massen in ihrer Sekundärmode (92) repräsentierende Regelgröße (y) direkt oder wenigstens eine davon abhängige Größe digitalisiert wird und wonach die Resonanzfrequenzstellgröße ($\tilde{u}_T$), die Quadraturstellgröße ($\tilde{u}_C$) und die Rückstellgröße ($\tilde{u}_S$) als digitale Größen erzeugt werden, wobei zwischen dem ersten Trimm-Elektrodenelement und der seismischen Masse eine erste elektrische Trimmspannung angelegt wird, zwischen dem zweiten Trimm-Elektrodenelement und der seismischen Masse eine zweite Trimmspannung, zwischen dem dritten Trimm-Elektrodenelement und der seismischen Masse eine dritte Trimmspannung und zwischen dem vierten Trimm-Elektrodenelement und der seismischen Masse eine vierte Trimmspannung angelegt wird, **dadurch gekennzeichnet, dass** die erste $u_1$, die zweite $u_2$, die dritte $u_3$ und die vierte Trimmspannung $u_4$ jeweils im Wesentlichen in folgender Abhängigkeit der Resonanzfrequenzstellgröße $\tilde{u}_T$, der Quadraturstellgröße $\tilde{u}_C$ und der Rückstellgröße $\tilde{u}_S$ eingestellt werden: $u_1 = \sqrt{\tilde{u}_T - \tilde{u}_C + \tilde{u}_S}$, $\quad u_2 = \sqrt{\tilde{u}_T + \tilde{u}_C - \tilde{u}_S}$,

$$u_3 = \sqrt{\tilde{u}_T + \tilde{u}_C + \tilde{u}_S}, \quad u_4 = \sqrt{\tilde{u}_T - \tilde{u}_C - \tilde{u}_S} \ .$$

2. Verfahren nach Anspruch 1, **dadurch gekennzeichnet, dass** die Trimm-Elektrodenelemente (1) jeweils so ausgebildet und angeordnet sind, dass sich zwischen dem ersten, zweiten, dritten und vierten Trimm-Elektrodenelement und einem jeweils zugeordneten Massen-Elektrodenelement (2) der zugeordneten seismischen Masse, wobei zwischen Trimm-Elektrodenelement und Massen-Elektrodenelement die zugehörige Trimmspannung angelegt wird, eine Kapazität $C_1$, $C_2$, $C_3$ und $C_4$ wie folgt ausbildet

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2} \ \text{und}$$

$$C_4 = \varepsilon_0 \frac{A_4 - r_4 t_4 q_1}{g_4 + s_4 q_2},$$

wobei i jeweils ein Index bezüglich der Nummerierung der Elektrodenelemente ist, $g_i$ die Spaltentfernung zwischen Trimm-Elektrodenelement und zugeordnetem Massen-Elektrodenelement im unausgelenkten Zustand, $A_i$ die Überlappfläche zwischen Trimm-Elektrodenelement und zugeordnetem Massen-Elektrodenelement im unausgelenkten Zustand, das Produkt $\pm r_i$ mal $t_i$ mal $q_1$ die Änderung der Überlappfläche in Abhängigkeit der Auslenkung der Primärmode $q_1$ ist, wobei $t_i$ die Überlapptiefe zwischen Trimm-Elektrodenelement und zugeordnetem Massen-Elektrodenelement und $r_i$ eine erste positive geometrische Konstante bezüglich der Auslenkung der Primärmode $q_1$ ist, und das Produkt $\pm s_i$ mal $q_2$ die Änderung der Spaltentfernung zwischen Trimm-Elektrodenelement und Massen-Elektrodenelement in Abhängigkeit der Auslenkung der Sekundärmode $q_2$ ist, wobei $s_i$ eine zweite positive geometrische Konstante bezüglich der Auslenkung der Sekundärmode $q_2$ ist.

3. Verfahren nach Anspruch 2, **dadurch gekennzeichnet, dass** bei sämtlichen Trimm-Elektrodenelement-Massen-Elektrodenelementpaaren (1, 2) $A_i$, $r_i$, $t_i$, $g_i$ und $s_i$ im Wesentlichen gleich sind.

4. Verfahren nach mindestens einem der Ansprüche 1 bis 3, **dadurch gekennzeichnet, dass** in der Regelungsanordnung (3) zunächst aus der Regelgröße (y) unter Vorgabe einer Regelführungsgröße eine Regelfehlergröße gebildet wird, wobei die Regelführungsgröße ein harmonisches Frequenzidentifikationssignal ($y_D$) mit einer Frequenz $\omega_s$ moduliert mit der Frequenz der Primärmode ($\omega_1$) ist oder der Regelführungsgröße solch ein Frequenzidentifikationssignal überlagert ist, wonach die so gebildete Regelfehlergröße einer ersten Reglereinheit (4) zugeführt wird, in welcher zumindest die Rückstellgröße ($\tilde{u}_S$) erzeugt wird.

5. Verfahren nach Anspruch 4, **dadurch gekennzeichnet, dass** danach die Rückstellgröße ($\tilde{u}_S$) mit zwei zueinander um 90° phasenverschobenen harmonischen Signalen in einer ersten Demodulatoreinheit (5) demoduliert wird, wodurch eine Quadraturgröße und eine Drehratengröße gewonnen werden, wonach aus der Quadraturgröße in Abhängigkeit einer Quadraturführungsgröße, insbesondere mit dem Wert "0", eine Quadraturregelfehlergröße erzeugt wird, welche einer Quadraturreglereinheit (10) zugeführt wird, die ausgangsseitig die Quadraturstellgröße ($\tilde{u}_C$) bereitstellt und wobei die Drehratengröße oder Quadraturgröße in einer zweiten Demodulatoreinheit (8) mit der Frequenz $\omega_s$ demoduliert wird, wodurch eine Frequenzgröße gewonnen wird, wonach aus der Frequenzgröße in Abhängigkeit einer Frequenzführungsgröße, insbesondere mit dem Wert "0" eine Frequenzregelfehlergröße erzeugt wird, die einer Frequenzreglereinheit (9) zugeführt wird, die ausgangsseitig die Resonanzfrequenzstellgröße ($\tilde{u}_T$) bereitstellt.

6. Verfahren nach Anspruch 5, **dadurch gekennzeichnet, dass** der Drehratensensor eine Rückstelleinheit (11) aufweist, welche die Rückstellgröße ($\tilde{u}_S$, $\tilde{U}_{SD}$) bereitstellt, wobei diese Rückstellgröße ($\tilde{u}_S$, $\tilde{U}_{SD}$) insbesondere einen definierten konstanten Rückstellwert aufweist.

7. Verfahren nach mindestens einem der Ansprüche 5-6, **dadurch gekennzeichnet, dass** der Sigma-Delta-Wandler als elektro-mechanischer Sigma-Delta-Modulator ausgebildet ist.

8. Verfahren nach Anspruch 7, **dadurch gekennzeichnet, dass** der Sigma-Delta-Modulator einen Kapazitäts-Spannungs-Wandler (13) umfasst, welcher eingangsseitig vor der ersten Reglereinheit (4) angeordnet ist, die erste Reglereinheit selber, einen mit dieser ausgangsseitig verbundenen Quantisierer (12), sowie für die Rückführung der Regelung einen Digital-Analog-Wandler und einen Spannungs-Kraft-Wandler.

9. Verfahren nach mindestens einem der Ansprüche 5 bis 8, **dadurch gekennzeichnet, dass** der Drehratensensor, insbesondere dessen Regelungsanordnung (3), eine Stellgrößentransformationseinheit (7) aufweist, durch welche in Abhängigkeit der Resonanzfrequenzstellgröße $\tilde{u}_T$, der Quadraturstellgröße $\tilde{u}_C$ und der Rückstellgröße $\tilde{u}_S$ nach

   Maßgabe der Gleichungen $u_1 = \sqrt{\tilde{u}_T - \tilde{u}_C + \tilde{u}_S}$, $u_2 = \sqrt{\tilde{u}_T + \tilde{u}_C - \tilde{u}_S}$, $u_3 = \sqrt{\tilde{u}_T + \tilde{u}_C + \tilde{u}_S}$, $u_4 = \sqrt{\tilde{u}_T - \tilde{u}_C - \tilde{u}_S}$ die Trimmspannungen $u_1$, $u_2$, $u_3$ und $u_4$ bereitgestellt werden.

10. Verfahren nach mindestens einem der Ansprüche 5 bis 9, **dadurch gekennzeichnet, dass** das Ausgangssignal der ersten Reglereinheit (4) digitalisiert wird und zumindest die erste Demodulatoreinheit (5), die zweite Demodulatoreinheit (8), die Quadraturreglereinheit (10) und die Frequenzreglereinheit (9) digital ausgebildet sind, sowie insbesondere zusätzlich die Stellgrößentransformationseinheit (7) und/oder die Rückstelleinheit (11) ebenfalls digital ausgebildet sind.

11. Verfahren nach Anspruch 8, **dadurch gekennzeichnet, dass** jeweils zwei Trimmspannungen paarweise ($U_1$, $U_4$), ($U_2$, $U_3$) jeweils mittels eines Mischers (M1, M2) verarbeitet werden, jeweils paarweise in Abhängigkeit des digitalen Ausgangssignals des Quantisierers (12).

12. Mikromechanischer Drehratensensor, umfassend wenigstens eine seismische Masse, zumindest eine Antriebseinrichtung zum Antreiben der seismischen Masse in der Primärmode und mindestens vier Trimm-Elektrodenelemente (1), welche der seismischen Masse (2) direkt oder indirekt gemeinsam zugeordnet sind wobei jeweils zwischen den einzelnen dieser Trimm-Elektrodenelemente und der seismischen Masse eine elektrische Trimmspannung angelegt wird, **dadurch gekennzeichnet, dass** der Drehratensensor zur Durchführung des Verfahrens nach mindestens einem der Ansprüche 1 bis 11 ausgebildet ist.

**Claims**

1. Method for the precise measuring operation of a micro-mechanical rotation rate sensor, comprising at least one seismic mass, at least one drive device for driving the seismic mass in the primary mode ($q_1$) and four trimming

electrode elements (1) which are jointly associated directly or indirectly with the seismic mass, wherein in each case an electric trimming voltage ($u_1$, $u_2$, $u_3$, $u_4$) is applied between each of these trimming electrode elements (1) and the seismic mass,
wherein

each of these electric trimming voltages ($u_1$, $u_2$, $u_3$, $u_4$) is set as a function of a resonance frequency manipulated variable ($\tilde{u}_T$, $\tilde{U}_{T,0}$), a quadrature manipulated variable ($\tilde{u}_c$, $\tilde{U}_{C,0}$) and a resetting variable ($\tilde{u}_S$), wherein the rotation rate sensor comprises a control arrangement (3) and wherein the control arrangement (3) comprises a sigma-delta converter with which a controlled variable (y) representing the detected deflection of the seismic mass in its secondary mode ($q_2$) is digitized directly or at least a variable dependent thereon is digitized, and after which the resonance frequency manipulated variable ($\tilde{u}_T$), the quadrature manipulated variable ($\tilde{u}_C$) and the resetting variable ($\tilde{u}_S$) are generated as digital variables, wherein a first electric trimming voltage is applied between the first trimming electrode element and the seismic mass, a second trimming voltage is applied between the second trimming electrode element and the seismic mass, a third trimming voltage is applied between the third trimming electrode element and the seismic mass, and a fourth trimming voltage is applied between the fourth trimming electrode element and the seismic mass, **characterized in that** the first trimming voltage $u_1$, the second trimming voltage $u_2$, the third trimming voltage $u_3$ and the fourth trimming voltage $u_4$ are each set substantially with the following dependence of the resonance frequency manipulated variable $\tilde{u}_T$, the quadrature manipulated variable $\tilde{u}_C$ and the resetting variable $\tilde{u}_S$ :

$$u_1 = \sqrt{\tilde{u}_T - \tilde{u}_C + \tilde{u}_S} \, , \quad u_2 = \sqrt{\tilde{u}_T + \tilde{u}_C - \tilde{u}_S} \, ,$$

$$u_3 = \sqrt{\tilde{u}_T + \tilde{u}_C + \tilde{u}_S} \, , \quad u_4 = \sqrt{\tilde{u}_T - \tilde{u}_C - \tilde{u}_S} \, .$$

2. Method according to Claim 1, **characterized in that** the trimming electrode elements (1) are each embodied and arranged in such a way that a capacitance $C_1$, $C_2$, $C_3$ and $C_4$ is formed between the first, second, third and fourth trimming electrode element and a respectively associated mass electrode element (2) of the associated seismic mass, with the associated trimming voltage being applied between the trimming electrode element and the mass electrode element, as follows:

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2} \quad \text{and}$$

$$C_4 = \varepsilon_0 \frac{A_4 - r_4 t_4 q_1}{g_4 + s_4 q_2},$$

where i is in each case an index relating to the numbering of the electrode elements, $g_i$ is the distance over the gap between the trimming electrode element and the associated mass electrode element in the undeflected state, $A_i$ is the overlapping area between the trimming electrode element and the associated mass electrode element in the undeflected state, the product $\pm$ $r_i$ times $t_i$ times $q_1$ is the change in the overlapping area as a function of the deflection of the primary mode $q_1$, wherein $t_i$ is the overlapping depth between the trimming electrode element and the associated mass electrode element and $r_i$ is a first positive geometric constant relating to the deflection of the primary mode $q_1$, and the product $\pm$ $s_i$ times $q_2$ is the change in the distance over the gap between the trimming electrode element and the mass electrode element as a function of the deflection of the secondary mode $q_2$, wherein $s_i$ is a second positive geometric constant relating to the deflection of the secondary mode $q_2$.

3. Method according to Claim 2, **characterized in that** $A_i$, $r_i$, ti, $g_i$ and $s_i$ are substantially the same in all the trimming electrode element/mass electrode element pairs (1, 2).

4. Method according to at least one of Claims 1 to 3, **characterized in that** in the control arrangement (3) firstly a control error variable is formed from the controlled variable (y) with predefinition of a control reference variable, wherein the control reference variable is a harmonic frequency identification signal ($y_D$) with the frequency $\omega_s$ modulated with the frequency of the primary mode ($\omega_1$, or such a frequency identification signal is superimposed on the control reference variable, after which the control error variable formed in this way is fed to a first controller unit (4) in which at least the resetting variable ($\tilde{u}_S$) is generated.

5. Method according to Claim 4, **characterized in that** the resetting variable ($\tilde{u}_S$) is then demodulated with two harmonic signals, phase-shifted through 90° with respect to one another, in a first demodulator unit (5), as a result of which a quadrature variable and a rotation rate variable are acquired, after which a quadrature control error variable is generated from the quadrature variable as a function of a quadrature reference variable, in particular with the value "0", which quadrature control error variable is fed to a quadrature controller unit (10) which makes available the quadrature manipulated variable ($\tilde{u}_C$) on the output side, and wherein the rotation rate variable or quadrature variable is demodulated in a second demodulator unit (8) with the frequency ($\omega_s$, as a result of which a frequency variable is acquired, after which a frequency control error variable is generated from the frequency variable as a function of a frequency reference variable, in particular with the value "0", which frequency control error variable is fed to a frequency controller unit (9) which makes available the resonance frequency manipulated variable ($\tilde{u}_T$) on the output side.

6. Method according to Claim 5, **characterized in that** the rotation rate sensor has a resetting unit (11) which makes available the resetting variable ($\tilde{u}_S$, $\tilde{U}_{SD}$), wherein this resetting variable ($\tilde{u}_S$, $\tilde{U}_{SD}$) has, in particular, a defined constant resetting value.

7. Method according to at least one of Claims 5-6, **characterized in that** the sigma-delta converter is embodied as an electro-mechanical sigma-delta modulator.

8. Method according to Claim 7, **characterized in that** the sigma-delta modulator comprises a capacitance/voltage converter (13) which is arranged upstream of the first controller unit (4) on the input side, the first controller unit itself, a quantizer (12) which is connected to the latter on the output side, and a digital/analog converter and a voltage/force transducer for feeding back the control process.

9. Method according to at least one of Claims 5 to 8, **characterized in that** the rotation rate sensor, in particular the control arrangement (3) thereof, has a manipulated variable transformation unit (7) which makes available the trimming voltages $u_1$, $u_2$, $u_3$ and $u_4$ as a function of the resonance frequency manipulated variable $\tilde{u}_T$, the quadrature manipulated variable $\tilde{u}_C$ and the resetting variable $\tilde{u}_S$, in accordance with the equations

$$u_1 = \sqrt{\tilde{u}_T - \tilde{u}_C + \tilde{u}_S}, \quad u_2 = \sqrt{\tilde{u}_T + \tilde{u}_C - \tilde{u}_S}, \quad u_3 = \sqrt{\tilde{u}_T + \tilde{u}_C + \tilde{u}_S},$$

$$u_4 = \sqrt{\tilde{u}_T - \tilde{u}_C - \tilde{u}_S}.$$

10. Method according to at least one of Claims 5 to 9, **characterized in that** the output signal of the first controller unit (4) is digitized, and at least the first demodulator unit (5), the second demodulator unit (8), the quadrature controller unit (10) and the frequency controller unit (9) are embodied in a digital form, and, in particular, in addition the manipulated variable transformation unit (7) and/or the resetting unit (11) are also embodied in a digital form.

11. Method according to Claim 8, **characterized in that** in each case two trimming voltages are processed in pairs ($U_1$, $U_4$) , ($U_2$, $U_3$) , in each case by means of one mixer (M1, M2), in each case in pairs as a function of the digital output signal of the quantizer (12).

12. Micro-mechanical rotation rate sensor, comprising at least one seismic mass, at least one drive device for driving the seismic mass in the primary mode and at least four trimming electrode elements (1) which are jointly associated directly or indirectly with the seismic mass (2), wherein in each case an electric trimming voltage is applied between each of these trimming electrode elements and the seismic mass, **characterized in that** the rotation rate sensor is embodied for carrying out the method according to at least one of Claims 1 to 11.

**Revendications**

1. Procédé pour le fonctionnement précis en mode de mesure d'un capteur de vitesse de rotation micromécanique, comprenant au moins une masse sismique, au moins un dispositif d'entraînement pour l'entraînement de la masse sismique dans le mode primaire ($q_1$) et quatre éléments d'électrode de réglage (1) qui sont associés conjointement, directement ou indirectement, à la masse sismique, dans lequel on applique respectivement, entre les éléments individuels de ces éléments d'électrode de réglage (1) et la masse sismique, une tension électrique de réglage ($u_1$,

$u_2$, $u_3$, $u_4$), dans lequel chacune de ces tensions électriques de réglage ($u_1$, $u_2$, $u_3$, $u_4$) est réglée en fonction d'une grandeur de commande de fréquence de résonance ($\tilde{u}_T$, $\tilde{U}_{T,0}$), d'une grandeur de commande de quadrature ($\tilde{u}_C$, $\tilde{U}_{C,0}$) et d'une grandeur de rétroaction ($\tilde{u}_S$), dans lequel le capteur de vitesse de rotation comprend un agencement de régulation (3) et dans lequel l'agencement de régulation (3) comprend un convertisseur sigma-delta avec lequel une grandeur de réglage représentant la déviation détectée de la masse sismique dans son mode secondaire ($q_2$) est numérisée directement, ou au moins une grandeur dépendante de cette grandeur de réglage (y) étant numérisée et après quoi, la grandeur de commande de fréquence de résonance ($\tilde{u}_T$), la grandeur de commande de quadrature ($\tilde{u}_C$) et la grandeur de rétroaction ($\tilde{u}_S$) sont générées en tant que grandeurs numériques, dans lequel on applique une première tension électrique de réglage entre le premier élément d'électrode de réglage et la masse sismique, une deuxième tension de réglage entre le deuxième élément d'électrode de réglage et la masse sismique, une troisième tension de réglage entre le troisième élément d'électrode de réglage et la masse sismique, et une quatrième tension de réglage entre le quatrième élément d'électrode de réglage et la masse sismique, **caractérisé en ce que** la première $u_1$, la deuxième $u_2$, la troisième $u_3$ et la quatrième tension de réglage $u_4$ sont respectivement réglées sensiblement en fonction de la grandeur de commande de fréquence de résonance $\tilde{u}_T$, de la grandeur de commande de quadrature $\tilde{u}_C$ et de la grandeur de rétroaction $\tilde{u}_S$ comme suit :

$$u_1 = \sqrt{\tilde{u}_T - \tilde{u}_C + \tilde{u}_S}, \quad u_2 = \sqrt{\tilde{u}_T + \tilde{u}_C - \tilde{u}_S}, \quad u_3 = \sqrt{\tilde{u}_T + \tilde{u}_C + \tilde{u}_S},$$

$$u_4 = \sqrt{\tilde{u}_T - \tilde{u}_C - \tilde{u}_S} \ .$$

2. Procédé selon la revendication 1, **caractérisé en ce que** les éléments d'électrode de réglage (1) sont respectivement réalisés et disposés de telle sorte qu'une capacité $C_1$, $C_2$, $C_3$ et $C_4$ se forme entre le premier, le deuxième, le troisième et le quatrième élément d'électrode de réglage et un élément d'électrode de masse (2) respectivement associé de la masse sismique associée, la tension de réglage associée étant appliquée entre l'élément d'électrode de réglage et l'élément d'électrode de masse, de la manière suivante :

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2} \quad \text{et}$$

$$C_4 = \varepsilon_0 \frac{A_4 - r_4 t_4 q_1}{g_4 + s_4 q_2},$$

avec i respectivement en tant qu'indice concernant la numérotation des éléments d'électrode, $g_i$ étant la distance d'espace entre l'élément d'électrode de réglage et l'élément d'électrode de masse dans l'état non dévié, $A_i$ étant la surface de superposition entre l'élément d'électrode de réglage et l'élément d'électrode de masse dans l'état non dévié, le produit $\pm$ $r_i$ fois $t_i$ fois $q_1$ étant la modification de la surface de superposition en fonction de la déviation du mode primaire $q_1$, dans lequel $t_i$ est la profondeur de superposition entre l'élément d'électrode de réglage et l'élément d'électrode de masse associé, et $r_i$ étant une première constante géométrique positive concernant la déviation du mode primaire $q_1$, et le produit $\pm$ $s_i$ fois $q_2$ étant la modification de la distance d'espace entre l'élément d'électrode de réglage et l'élément d'électrode de masse en fonction de la déviation du mode secondaire $q_2$, dans lequel $s_i$ est une deuxième constante géométrique positive concernant la déviation du mode secondaire $q_2$.

3. Procédé selon la revendication 2, **caractérisé en ce que**, pour l'ensemble des paires d'élément d'électrode de réglage - élément d'électrode de masse (1, 2), $A_i$, $r_i$, $t_i$, $g_i$ et $s_i$ sont sensiblement identiques.

4. Procédé selon l'une au moins des revendications 1 à 3, **caractérisé en ce que**, dans l'agencement de régulation (3), on forme tout d'abord, à partir de la grandeur de réglage (y) en spécifiant une grandeur de référence de réglage, une grandeur d'erreur de réglage, dans lequel la grandeur de référence de réglage est un signal d'identification de fréquence harmonique ($y_D$) avec une fréquence ($\omega_s$) modulée avec la fréquence du mode primaire ($\omega_1$) ou bien un tel signal d'identification de fréquence étant superposé à la grandeur de référence de réglage, après quoi la grandeur d'erreur de réglage ainsi formée est amenée à une première unité de réglage (4) dans laquelle au moins la grandeur de rétroaction ($\tilde{u}_S$) est générée.

5. Procédé selon la revendication 4, **caractérisé en ce que** l'on démodule ensuite la grandeur de rétroaction ($\tilde{u}_S$) avec deux signaux harmoniques à décalage de phase de 90° entre eux dans une première unité de démodulation (5), moyennant quoi on obtient une grandeur de quadrature et une grandeur de vitesse de rotation, après quoi l'on génère, à partir de la grandeur de quadrature en fonction d'une grandeur de référence de quadrature, en particulier avec la valeur « 0 », une grandeur d'erreur de réglage de quadrature qui est amenée à une unité de réglage de quadrature (10), laquelle met à disposition la grandeur de commande de quadrature $(\tilde{u}_C)$ du côté de sortie, et dans lequel la grandeur de vitesse de rotation ou grandeur de quadrature est démodulée dans une deuxième unité de démodulation (8) avec la fréquence $\omega_S$, moyennant quoi on obtient une grandeur de fréquence, après quoi l'on génère, à partir de la grandeur de fréquence en fonction d'une grandeur de référence de fréquence, en particulier avec la valeur « 0 », une grandeur d'erreur de réglage de fréquence qui est amenée à une unité de réglage de fréquence (9), laquelle met à disposition la grandeur de commande de fréquence de résonance $(\tilde{u}_T)$ du côté de sortie.

**6.** Procédé selon la revendication 5, **caractérisé en ce que** le capteur de vitesse de rotation présente une unité de rétroaction (11) qui met à disposition la grandeur de rétroaction $(\tilde{u}_S, \check{U}_{SD})$, dans lequel cette grandeur de rétroaction $(\tilde{u}_S, \check{U}_{SD})$ présente en particulier une valeur de rétroaction constante définie.

**7.** Procédé selon l'une au moins des revendications 5 et 6, **caractérisé en ce que** le convertisseur sigma-delta est réalisé en tant que modulateur sigma-delta électromécanique.

**8.** Procédé selon la revendication 7, **caractérisé en ce que** le modulateur sigma-delta comprend un convertisseur de capacité-tension (13) qui est disposé côté d'entrée devant la première unité de réglage (4), la première unité de réglage elle-même, un quantificateur (12) relié côté sortie à celle-ci ainsi qu'un convertisseur numérique-analogique pour la rétroaction de la régulation et un convertisseur de tension-force.

**9.** Procédé selon l'une au moins des revendications 5 à 8, **caractérisé en ce que** le capteur de vitesse de rotation, en particulier l'agencement de régulation (3) de celui-ci, présente une unité de transformation de grandeurs de commande (7) grâce à laquelle, en fonction de la grandeur de commande de fréquence de résonance $\tilde{u}_T$, de la grandeur de commande de quadrature $\tilde{u}_C$ et de la grandeur de rétroaction $\tilde{u}_S$, on met à disposition les tensions de réglage $u_1$, $u_2$, $u_3$ et $u_4$ conformément aux équations

$$u_1 = \sqrt{\tilde{\tilde{u}}_T - \tilde{u}_C + \tilde{\tilde{u}}_S}\,, \ u_2 = \sqrt{\tilde{\tilde{u}}_T + \tilde{u}_C - \tilde{u}_S}\,, u_3 = \sqrt{\tilde{u}_T + \tilde{u}_C + \tilde{u}_S}\,,$$
$$u_4 = \sqrt{\tilde{u}_T - \tilde{u}_C - \tilde{u}_S}\ .$$

**10.** Procédé selon l'une au moins des revendications 5 à 9, **caractérisé en ce que** le signal de sortie de la première unité de réglage (4) est numérisé et **en ce qu'**au moins la première unité de démodulation (5), la deuxième unité de démodulation (8), l'unité de réglage de quadrature (10) et l'unité de réglage de fréquence (9) sont réalisées de manière numérique, tout comme en particulier l'unité de transformation de grandeurs de commande (7) et/ou l'unité de rétroaction (11) sont additionnellement également réalisées de manière numérique.

**11.** Procédé selon la revendication 8, **caractérisé en ce que** respectivement deux tensions de réglage sont traitées par paires $(U_1, U_4)$, $(U_2, U_3)$ respectivement au moyen d'un mélangeur (M1, M2), respectivement par paires, en fonction du signal de sortie numérique du quantificateur (12).

**12.** Capteur de vitesse de rotation micromécanique, comprenant au moins une masse sismique, au moins un dispositif d'entraînement pour l'entraînement de la masse sismique dans le mode primaire et au moins quatre éléments d'électrode de réglage (1) qui sont associés directement ou indirectement à la masse sismique (2), dans lequel on applique, respectivement entre les éléments individuels de ces éléments d'électrode de réglage et la masse sismique, une tension électrique de réglage, **caractérisé en ce que** le capteur de vitesse de rotation est réalisé pour mettre en oeuvre le procédé selon l'une au moins des revendications 1 à 11.

$g_i$-$z_i$

$z_i$

1

$x_i$

2

$l_i$+$x_i$

----Gehäuse

-------------------starre Elektrode

----bewegliche Elektrode

# Fig. 1

Fig. 2

Fig. 3

Fig. 4

Fig. 5

**Fig. 6**

**Fig. 7**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03010492 A1
- WO 2005066585 A1